# EUROPEAN PATENT SPECIFICATION

(11) **EP 4 138 319 B1**
(45) Date of publication and mention of the grant of the patent: **16.04.2025**
(21) Application number: 20948007.8
(22) Date of filing: 06.08.2020
(51) Int. Cl.: H04L 1/18, H04L 1/1867

(54) **HYBRID AUTOMATIC RETRANSMISSION REQUEST FEEDBACK METHOD AND APPARATUS, TERMINAL, AND NETWORK DEVICE**
VERFAHREN UND VORRICHTUNG ZUR RÜCKKOPPLUNG VON HYBRIDEN AUTOMATISCHEN NEUÜBERTRAGUNGSANFRAGEN, ENDGERÄT UND NETZWERKVORRICHTUNG
PROCÉDÉ ET APPAREIL DE RÉPONSE À UNE DEMANDE DE RETRANSMISSION AUTOMATIQUE HYBRIDE, TERMINAL ET DISPOSITIF DE RÉSEAU

(43) Date of publication of application: 22.02.2023
(73) Proprietor: GUANGDONG OPPO MOBILE TELECOMMUNICATIONS CORP., LTD., Dongguan, Guangdong 523860 (CN)
(72) Inventor: DING, Yi, Dongguan, Guangdong 523860 (CN); ZHAO, Zhenshan, Dongguan, Guangdong 523860 (CN); LIN, Huei-Ming, South Yarra Victoria 3141 (AU)
(74) Representative: Taor, Simon Edward William
(86) International application number: PCT/CN2020/107535
(87) International publication number: WO 2022/027491

(56) References cited:
- WO-A1-2018/201982
- WO-A1-2020/068973
- CN-A- 107 359 970
- CN-A- 110 463 134
- CN-A- 111 277 370
- US-A1- 2020 204 329
- LENOVO ET AL: "Physical layer procedures in NR V2X", 15 February 2019, 3GPP DRAFT; R1-1902157, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP051599852
- OPPO: "Physical layer procedure for NR-V2X sidelink", 8 October 2019, 3GPP DRAFT; R1-1910375 PHY LAYER PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP051809105
- APPLE: "Remaining Issues of Physical Layer Procedures for NR V2X", 3GPP DRAFT; R1-2004219, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200525 - 20200605, 16 May 2020 (2020-05-16), Mobile Competence Centre ; 650, route des Lucioles ; F-06921 Sophia-Antipolis Cedex ; France , XP051885977

## Description

### TECHNICAL FIELD

The present disclosure relates to communication technology, and more particularly, to a Hybrid Automatic Repeat reQuest (HARQ) feedback method and apparatus, a terminal and a network device.

### BACKGROUND

The 3^{rd} Generation Partnership Project (3GPP) is devoted to standardization of communication protocols. Here, the existing communication protocol standards have related records for the HARQ feedback mechanism in the communication process.

Currently, the existing network deployment needs to continue to meet the goals of high rate, low latency and high mobility. At the same time, with the diversity and complexity of transmission services in the communication network, the HARQ feedback mechanism for the services in the existing communication protocols still has shortcomings, and further research is needed. US 2020/204328 A1 discloses a radio terminal receives multicast data belonging to an MBMS service from a base station. WO 2020/068973 A1 discloses methods, devices and systems for supporting HARQ on V2X. 3GPP Draft R1-1902157 discusses physical layer procedures in NR V2X. 3GPP Draft R1-1910375 discusses physical layer procedure for NR-V2X sidelink.

### SUMMARY

The embodiments of the present disclosure provide a Hybrid Automatic Repeat reQuest (HARQ) feedback method and apparatus, a terminal, and a network device, capable of pre-configuring a terminal with a HARQ feedback mode for a first service, thereby facilitating improvement of the communication reliability of the transmission of the first service between the network device and the terminal.

In a first aspect, an embodiment of the present disclosure provides a Hybrid Automatic Repeat reQuest (HARQ) feedback according to appended claim 1.

In a second aspect, an embodiment of the present disclosure provides a Hybrid Automatic Repeat reQuest (HARQ) feedback method according to appended claim 2.

In a third aspect, an embodiment of the present disclosure provides a Hybrid Automatic Repeat reQuest (HARQ) feedback apparatus according to appended claim 3.

In a fourth aspect, an embodiment of the present disclosure provides a Hybrid Automatic Repeat reQuest (HARQ) feedback apparatus according to appended claim 4.

In a fifth aspect, an embodiment of the present disclosure provides a terminal according to appended claim 5.

In a sixth aspect, an embodiment of the present disclosure provides a network device according to appended claim 6.

It can be seen that, in the embodiment of the present disclosure, the terminal obtains the first configuration information from the network device, and determines the HARQ feedback mode to the network device for the first service based on the first configuration information, thereby facilitating configuration of the HARQ feedback mode for the first service to the terminal. In addition, since the terminal can feed back HARQ feedback information for the first service to the network device using the HARQ feedback mode for the first service, such that the network device can perform related operations such as retransmission subsequently, it is advantageous in improving communication reliability of the transmission of the first service between the network device and the terminal. Moreover, since the first configuration information may be transmitted by the network device to the terminal, it enables the network device to control the HARQ feedback mode to be used by the terminal for the first service. Alternatively, since the first configuration information may be pre-configured, it facilitates pre-configuration of the HARQ feedback mode to be used for the first service to the terminal.

### BRIEF DESCRIPTION OF DRAWINGS

The figures to be used in the description of the embodiments or the prior art will be briefly introduced below, in which:
FIG. 1 is a system architecture diagram of an exemplary communication system according to an embodiment of the present disclosure;
FIG. 2 is a schematic diagram showing a structure of an SC-PTM network architecture according to an embodiment of the present disclosure;
FIG. 3 is a schematic diagram showing a structure of an SC-PTM channel and a mapping thereof according to an embodiment of the present disclosure;
FIG. 4 is a system architecture diagram of another exemplary communication system according to an embodiment of the present disclosure;
FIG. 5 is a schematic flowchart illustrating a Hybrid Automatic Repeat reQuest (HARQ) feedback method according to an embodiment of the present disclosure;
FIG. 6 is a schematic flowchart illustrating another Hybrid Automatic Repeat reQuest (HARQ) feedback method according to an embodiment of the present disclosure;
FIG. 7 is a system architecture diagram showing a network device configuring first configuration information via RRC signaling according to an embodiment of the present disclosure;
FIG. 8 is a system architecture diagram showing a network device configuring first configuration information via DCI according to an embodiment of the present disclosure;
FIG. 9 is a system architecture diagram showing a network device configuring first configuration information via DCI according to another embodiment of the present disclosure;
FIG. 10 is a system architecture diagram showing a terminal determining a HARQ feedback mode for a first service based on first configuration information according to an embodiment of the present disclosure;
FIG. 11 is a system architecture diagram showing a terminal determining a HARQ feedback mode for a first service based on first configuration information according to another embodiment of the present disclosure;
FIG. 12 is a system architecture diagram showing a terminal determining a HARQ feedback mode for a first service based on first configuration information according to yet another embodiment of the present disclosure;
FIG. 13 is a block diagram showing functional units of a Hybrid Automatic Repeat reQuest (HARQ) feedback apparatus according to an embodiment of the present disclosure;
FIG. 14 is a block diagram showing functional units a Hybrid Automatic Repeat reQuest (HARQ) feedback apparatus according to another embodiment of the present disclosure;
FIG. 15 is a schematic diagram showing a structure of a terminal according to an embodiment of the present disclosure; and
FIG. 16 is a schematic diagram showing a structure of a network device according to an embodiment of the present disclosure.

### DESCRIPTION OF EMBODIMENTS

The technical solutions in the embodiments of the present disclosure will be described below with reference to the accompanying figures.

The solutions according to the embodiments of the present disclosure can be applied to various communication systems, including for example: Global System of Mobile Communication (GSM), Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolved NR system, LTE-based access to unlicensed spectrum (LTE-U) system, NR-based access to unlicensed spectrum (NR-U) system, Non-Terrestrial Network (NTN) system, Universal Mobile Telecommunication System (UMTS), Wireless Local Area Networks (WLAN), Wireless Fidelity (WiFi), the 5^{th} Generation (5G) communication system, or other communication systems.

Generally, traditional communication systems can support a limited number of connections and are easy to implement. However, with the development of communication technology, communication systems will support not only traditional wireless communication systems, but also e.g., Device to Device (D2D) communication, Machine to Machine (M2M) communication, and Machine Type Communication (MTC), Vehicle to Vehicle (V2V) communication, Vehicle to everything (V2X) communication, etc. The embodiment can also be applied to these communication systems.

Optionally, the communication system of the embodiment may be applied to beamforming, Carrier Aggregation (CA), Dual Connectivity (DC), or Standalone (SA) deployment scenarios.

Optionally, the communication system of an embodiment of the present disclosure may be applied to unlicensed spectrum or shared spectrum. Alternatively, the communication system of the embodiment may be applied to licensed spectrum or non-shared spectrum.

The embodiments of the present disclosure are described in conjunction with a terminal and a network device, and thus the involved terminal and network device will be described in detail in the embodiment.

In particular, the terminal device may be a User Equipment (UE), an access terminal, a user unit, a user station, a mobile station, a remote station, a remote terminal, a mobile device, a user terminal, a smart terminal, a wireless communication device, a user agent, or a user device. The terminal device may be a cellular phone, a cordless phone, a Session Initiation Protocol (SIP) phone, a Wireless Local Loop (WLL) station, a Personal Digital Assistant (PDA), a handheld device or a computing device having a wireless communication function, another processing device connected to a wireless modem, a relay device, a vehicle-mounted device, a wearable device, a terminal in the next generation communication system (e.g., NR network), or a terminal in a future evolved Public Land Mobile Network (PLMN), etc. The embodiments of the present disclosure are not limited to any of these examples.

Further, in the embodiments of the present disclosure, the terminal can be deployed on land, including indoor or outdoor, handheld, worn, or vehicle-mounted, deployed on water (e.g., on a ship), or deployed in the air (e.g., on an airplane, a balloon, a satellite, etc.).

Further, the terminal may be a mobile phone, a tablet computer (Pad), a computer with a wireless transceiver function, a Virtual Reality (VR) terminal device, an Augmented Reality (AR) terminal device, a wireless terminal device in industrial control,, a wireless terminal device in self driving, a wireless terminal device in remote medical, a wireless terminal device in smart grid, a wireless terminal device in transportation safety, a wireless terminal device in smart city, or a wireless terminal device in smart home.

The network device may be a device communicating with terminals. The network device may be a base station such as Base Transceiver Station (BTS) in a GSM system or a CDMA communication system, a base station such as NodeB (NB) in a WCDMA communication system, a base station such as Evolutional Node (eNB or eNodeB) in an LTE communication system, or a base station (e.g., gNB) in an NR communication network. The network device may be an Access Point (AP) in a Wireless Local Area Network (WLAN), a relay station, a network device in a future evolved PLMN, or a network device in an NTN.

It is to be noted that in some network deployments, a gNB may include a Centralized Unit (CU) and a DU. The gNB may also include an Active Antenna Unit (AAU). The CU implements some functions of the gNB, and the DU implements some functions of the gNB. For example, the CU is responsible for processing non-real-time protocols and services, and providing functions at the Radio Resource Control (RRC) and Packet Data Convergence Protocol (PDCP) layers. The DU is responsible for processing physical layer protocols and real-time services, and providing functions at the Radio Link Control (RLC) layer, the Media Access Control (MAC) layer, and the physical (PHY) layer. The AAU implements some physical layer processing functions, radio frequency processing and active antennas related functions. Since information at the RRC layer will eventually become information at the PHY layer, or be transformed from information at the PHY layer, in this architecture, higher-layer signaling, such as RRC layer signaling, can also be considered to be transmitted by the DU, or by DU+AAU. It can be appreciated that the network device may be a device including one or more of a CU node, a DU node, or an AAU node. In addition, the CU may be considered as a network device in an access network (Radio Access Network, or RAN), or the CU may be considered as a network device in a core network (CN), and the present disclosure is not limited to any of these examples.

Further, the network device may have mobile characteristics, e.g., the network device may be a mobile device. Optionally, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. Optionally, the network device may also be a base station provided in a location such as land or water.

Further, the network device may provide services for a cell, and the terminal may communicate with the network device over transmission resources (e.g., frequency spectral resources) in the cell. The cell may be a cell corresponding to the network device (e.g., base station). The cell may belong to a macro base station or a base station corresponding to a small cell. The small cell here may include a metro cell, a micro cell, a pico cell, a femto cell, or the like. These small cells have characteristics such as small coverage and low transmission power, and are suitable for providing high-rate data transmission services.

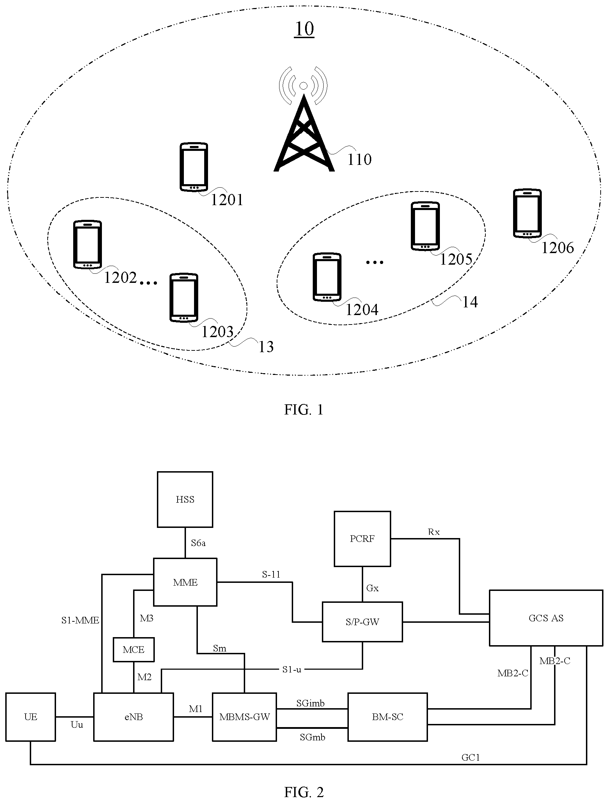

Exemplarily, a communication system 10 in which an embodiment of the present disclosure can be applied is schematically shown in FIG. 1. The communication system 100 may include a network device 110, which may be a device communicating with terminals 120. The network device 110 may provide communication coverage for a particular geographic area, and may communicate with terminals 120 located within the coverage. The terminals 120 may include a terminal 1201, a terminal 1202, a terminal 1203, a terminal 1204, a terminal 1205, a terminal 1206, and the like. Here, the terminal 1201, the terminal 1202, the terminal 1203, the terminal 1204, the terminal 1205 and the terminal 1206 can form a broadcast communication system by means of broadcast, and the terminal 1202 and the terminal 1203 can form a communication system 13 by means of multicast, and the terminal 1204 and the terminal 1205 can form a communication system 14 by means of multicast.

Optionally, the communication system 10 may include multiple network devices, and the coverage of each network device may include other numbers of terminals. The present disclosure is not limited to this.

Optionally, the communication system 10 may also include other network entities such as a network controller or a Mobility Management Entity (MME). The present disclosure is not limited to this.

Optionally, the communication between the network device and the terminal and the communication between the terminals in the communication system 10 may be a wireless connection or a wired connection. The present disclosure is not limited to this.

Before introducing the HARQ feedback method according to the embodiment in detail, the related technologies involved in the embodiment will be introduced.

### (1) Related application scenarios of 5G communication

In view of people's pursuit of rate, delay, high-speed mobility, and energy efficiency, as well as the diversity and complexity of services in future lives, the 3GPP international standardization organization began to develop 5G communications. The main application scenarios of the 5G communications include enhanced Mobile Broad Band (eMBB), Low-Latency High-Reliability Communication (URLLC), and massive Machine-Type Communication (mMTC).

The eMBB mainly targets at providing users with multimedia content, services and data, and its demand is growing rapidly. On the other hand, since the eMBB may be deployed in different scenarios, such as indoor, urban, rural, etc., its capabilities and requirements are also quite different, and detailed analysis is required for specific deployment scenarios. Here, typical applications of the URLLC include industrial automation, power automation, telemedicine operations (surgery), and traffic safety. Typical features of the mMTC include high connection density, small data volume, latency-insensitive services, low cost of modules, and long service lives.

### (2) Radio Resource Control (RRC) state

In the 5G communication system, in order to reduce the air interface signaling, restore the wireless connection quickly and restore the data service quickly, a new RRC state is defined, i.e., RRC_INACTIVE state, which is different from the RRC_IDLE state and the RRC_CONNECTED state as follows:

RRC_IDLE: Mobility is terminal-based cell reselection. Paging is initiated by the CN. The paging area is configured by the CN. There is no UE Access Stratum (AS) context of the terminal on the base station side. There is no RRC connection.

RRC_CONNECTED: There is an RRC connection. The base station can perform RRC configuration for the terminal. The base station and the terminal have the UE AS context. The network side knows the location of the terminal. Unicast data can be transmitted between the terminal and the base station.

RRC_INACTIVE: Mobility is terminal-based cell reselection. There is a connection between CN-NR (core network connected NR). There is a UE AS context on a base station. Paging is triggered by the RAN. The Radio Access Network (RAN) based paging area is managed by the RAN. The network side knows that the location of the terminal based on the paging area level of the RAN.

### (3) Multimedia Broadcast Multicast Service (MBMS)

The MBMS service is a service introduced in the 3GPP Release 6 (R6). The MBMS service is a technology that transmits data from one data source to multiple terminals over shared network resources. It can efficiently utilize network resources while providing multimedia services, and provide high-speed (256 kbps) multimedia service broadcast and multicast.

Due to the low spectral efficiency of MBMS in the 3GPP R6, it is not enough for effective operation of mobile phone or TV type services. Therefore, in the LTE communication system, the 3GPP clearly proposes to enhance the capability to support downlink high-speed multimedia broadcast and multicast services, and determines the design requirements for the physical layer and air interface.

The Enhanced Multimedia Broadcast Multicast Service (E-MBMS) was introduced into the LTE communication system in the 3GPP R9. The E-MBMS proposes the concept of Single Frequency Network (SFN), that is, a unified frequency is used to transmit data in all cells at the same time, but synchronization between cells must be guaranteed. This method can greatly improve the overall signal-to-noise ratio distribution over the cells, and the spectral efficiency will also be greatly improved accordingly, thereby providing broadcast and multicast of services based on the Internet Protocol (IP) multicast protocol.

In LTE/LTE-A, the MBMS has only a broadcast bearer mode, but no multicast bearer mode. Meanwhile, the reception of the MBMS service is applicable to the terminal in the RRC _CONNECTED or RRC_IDLE state.

### (4) Single Cell Point To Multipoint (SC-PTM)

The 3GPP Release 13 introduced SC-PTM. The SC-PTM is based on the MBMS network architecture, and a multi-cell/multicast coordination entity (MCE) decides to use the SC-PTM transmission mode as the multimedia broadcast multicast service single frequency network (MBSFN) transmission mode.

Referring to FIG. 2, which is a schematic diagram showing a structure of an SC-PTM network architecture according to an embodiment of the present disclosure, the SC-PTM network architecture includes a UE, an eNB, a Home Subscriber Server (HSS), a Mobility Management Entity (MME), a Packet Data Network/Serving Gateway (P/S-GW), an MCE, an eMBMS Gateway (MBMS-GW), a Broadcast Multicast - Service Center (BM-SC), a Policy and Charging Rules Function (PCRF), etc.

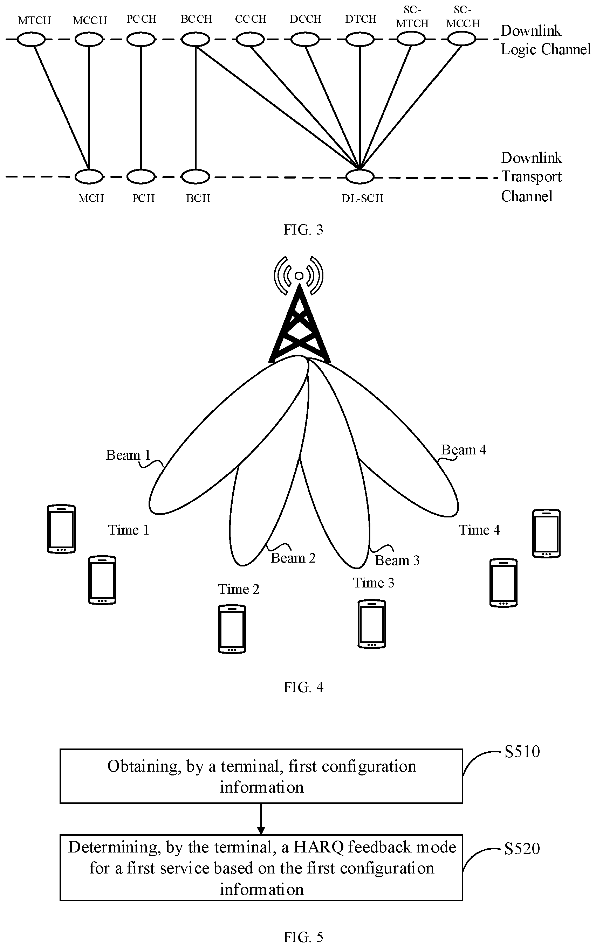

In addition, the 3GPP R13 introduces new logical channels, i.e., Single Cell Multicast Control Channel (SC-MCCH) and Single Cell Multicast Transport Channel (SC-MTCH). Referring to FIG. 3, the SC-MCCH and the SC-MTCH are mapped to a Downlink Shared Channel (DL-SCH), which is in turn mapped to a Physical Downlink Shared Channel (PDSCH). Here, the SC-MCCH and the SC-MTCH do not support HARQ operation.

### (5) HARQ

The HARQ is a technology that combines Forward Error Correction (FEC) and Automatic Repeat reQuest (ARQ). In a HARQ feedback process, a receiver decodes data transmitted by a transmitter and feeds back corresponding HARQ feedback information. Here, if the decoding of the data fails, the receiver feeds back a Negative Acknowledgement (NACK), or if the decoding of the data succeeds, the receiver feeds back an Acknowledgement (ACK). Then, the transmitter decides whether to perform retransmission according to the HARQ feedback information fed back by the receiver. Further, the receiver may combine data transmitted multiple times by the transmitter to improve the probability of successful decoding.

Commonly used HARQ feedback modes may include NACK-Only and ACK-or-NACK.

The NACK-Only mode means that the receiver only feeds back NACK to the transmitter when the reception fails, and provides no feedback when the reception succeeds.

The ACK-or-NACK mode means that the receiver feeds back NACK to the transmitter when the reception fails, and feeds back an ACK to the transmitter when the reception succeeds.

Here, the NACK-Only mode has a problem with Dis-continuous Transmission (DTX). When the receiver is performing the decoding operation, it generally decodes control information first and then decodes the data according to the content in the control information. If the receiver does not detect the control information, the receiver will not give any feedback. In this case, the transmitter cannot determine whether the receiver successfully decodes the data or does not detect the control information at all.

Currently, the existing network deployments need to continuously meet the goals of high rate, low latency, high mobility, and low energy efficiency. At the same time, with the diversity and complexity of transmission services in the communication network, the HARQ feedback mechanism for services in the existing communication protocols still has shortcomings, and further research is thus needed.

In view of the above existing problems, the embodiment of the present disclosure proposes a technical solution for implementation. The technical solution in the embodiment of the present disclosure may be applicable to the following scenarios or other scenarios, and the present disclosure is not limited to this.

In the HARQ feedback mechanism for a first service, a base station transmits the service to a target UE group on a certain time-frequency resource. The target UE group may include all UEs that can receive the service (e.g., broadcast) or a group of specific UEs (e.g., multicast or groupcast). Further, each UE in the target UE group can either feed back the HARQ feedback information in the NACK-Only mode, or feed back the HARQ feedback information in the ACK-or-NACK mode, as described in detail as follows:
1) When the UEs in the target UE group feed back the HARQ feedback information in the NACK-Only mode, there will be typically the following case.
   All UEs in the target UE group feed back NACKs to the base station on one or more Physical Uplink Control Channel (PUCCH) resources. In this case, the base station may retransmit the MBMS service in response to detecting NACKs or a certain number or proportion of NACKs on the one or more PUCCH resources.
2) When the UEs in the target UE group feed back HARQ information in the ACK-or-NACK mode, there will be typically the following three cases.

Case 1: All UEs in the target UE group feed back ACKs to the base station on one or more PUCCH resources, and feed back NACKs to the base station on one or more further PUCCH resources.

Case 2: All UEs in the target UE group feed back ACKs to the base station on respective PUCCH resources, and feed back NACKs to the base station on one or more other PUCCH resources.

Case 3: All UEs in the target UE group feed back ACKs or NACKs to the base station on respective PUCCH resources.

To summarize, the base station can determine whether to retransmit the service according to a calculated proportion of ACKs and NACKs.

In addition, the 5G frequency range defined by the 3GPP can be divided into two regions: Frequency Range 1 (FR1) and FR2. Here, the frequency range of FR1 is 450 MHz to 6 GHz, also referred to as sub 6 GHz (below 6 GHz), while the frequency range of FR2 is above 6 GHz (for example, 24 GHz to 52 GHz), and most of the electromagnetic wave wavelengths in this spectrum are at millimeter-level, also known as millimeter waves. In the communication deployment in FR2, in order to ensure the coverage, the base station typically transmits data by means of beamforming. Therefore, in order to ensure that all UEs in the target UE group can receive the service, the base station typically transmits the first service using all beams. The base station transmits the same first service using different beams at different time instants, such that UEs located at different locations in the cell may receive the first service correctly. For example, in FIG. 4, the base station uses Beam 1 to transmit the first service at Time 1, uses Beam 2 to transmit the first service at Time 2, uses Beam 3 to transmit the first service at Time 3, and so on. It should be noted that, although the same first service is transmitted via different beams, Downlink Control Information (DCI) for scheduling the first service via different beams may be different.

With reference to the above description, an embodiment of the present disclosure provides a schematic flowchart illustrating a HARQ feedback method. Referring to FIG. 5, the method includes the following actions.

At S510, a terminal obtains first configuration information.

Specifically, the terminal obtaining the first configuration information includes: the terminal obtaining the first configuration information from a network device; or the terminal obtaining the first configuration information that is preconfigured. It can be appreciated that the first configuration information may be obtained by the terminal from the network device, or may be pre-configured.

Specifically, the first configuration information is transmitted via at least one of: Radio Resource Control (RRC) signaling, Downlink Control Information (DCI) scheduling a unicast service, DCI scheduling a first service, or system broadcast information. It can be appreciated that the network device configures or indicates the first configuration information to the terminal via at least one of RRC signaling, the DCI scheduling the unicast service, the DCI scheduling the first service, or the system broadcast information.

Further, the system broadcast information may include a System Information Block (SIB).

At S520, the terminal determines a HARQ feedback mode for a first service based on the first configuration information.

It can be seen that, in the embodiment of the present disclosure, the terminal obtains the first configuration information, and determines the HARQ feedback mode for the first service based on the first configuration information, thereby facilitating configuration of the HARQ feedback mode for the first service to the terminal. In addition, since the terminal can feed back HARQ feedback information for the first service to the network device using the HARQ feedback mode for the first service, such that the network device can perform related operations such as retransmission subsequently, it is advantageous in improving communication reliability of the transmission of the first service between the network device and the terminal. Moreover, since the first configuration information may be transmitted by the network device to the terminal, it enables the network device to control the HARQ feedback mode to be used by the terminal for the first service. Alternatively, since the first configuration information may be pre-configured, it facilitates pre-configuration of the HARQ feedback mode to be used for the first service to the terminal.

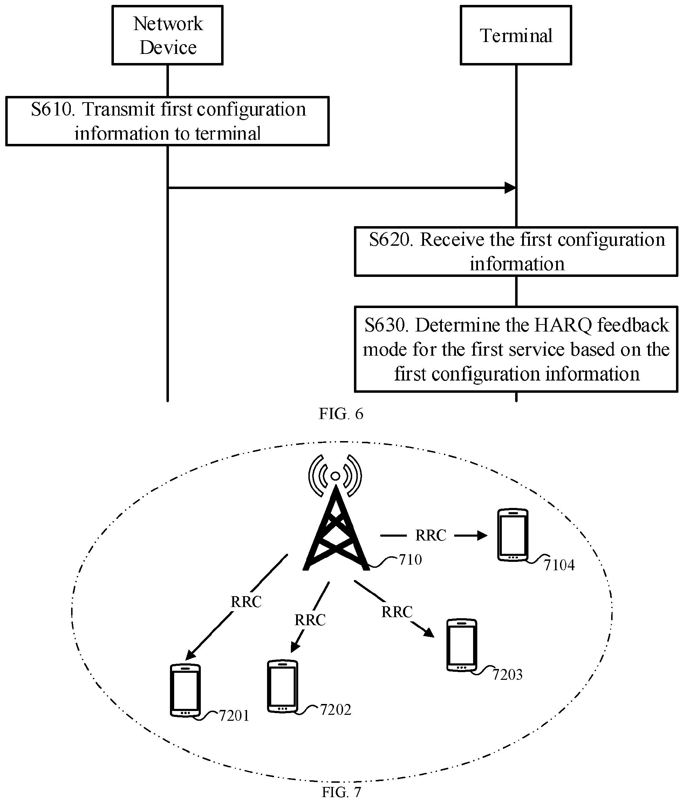

Correspondingly to the above embodiment, an embodiment of the present disclosure provides a schematic flowchart illustrating another HARQ feedback method. Referring to FIG. 6, the method includes the following actions.

At S610, a network device transmits first configuration information to a terminal.

Specifically, the first configuration information may be used to determine a HARQ feedback mode for a first service.

Specifically, the first configuration information may be transmitted via at least one of: RRC signaling, DCI scheduling a unicast service, DCI scheduling the first service, or system broadcast information. It can be appreciated that the network device may configure or indicate the first configuration information to the terminal via at least one of the RRC signaling, the DCI scheduling the unicast service, the DCI scheduling the first service, or the system broadcast information.

At S620, the terminal receives the first configuration information.

Further, the system broadcast information may include a System Information Block (SIB).

At S630, the terminal determines the HARQ feedback mode for the first service based on the first configuration information.

It is to be noted that the first configuration information in the embodiment of the present disclosure has the following three cases:
Case 1: The first configuration information may include information on the HARQ feedback mode for the first service. It can be appreciated that the network device may directly configure the information on the HARQ feedback mode for the first service to the terminal. In this case, the terminal can directly learn the HARQ feedback mode to be used for the first service based on the first configuration information. That is, the network device can directly inform the terminal which HARQ feedback mode needs to be used for the first service, such that the network device can control the HARQ feedback mode used by the terminal for the first service, which is advantageous in improving the communication reliability of the transmission of the first service between the network device and the terminal.
Case 2: The first configuration information may include a predetermined threshold. In this case, the terminal may determine the HARQ feedback mode for the first service based on the predetermined threshold. It can be seen that the network device may pre-configure the terminal with a predetermined threshold for determining the HARQ feedback mode for the first service, such that the network device can control the HARQ feedback mode to be used by the terminal for the first service, which is advantageous in improving the communication reliability of the transmission of the first service between the network device and the terminal.
Case 3: When the first configuration information is transmitted by the DCI scheduling the first service, and the DCI scheduling the first service is carried on a third beam, the first configuration information may include a first state value described in at least one related field in the DCI scheduling the first service. In this case, when the terminal receives the DCI scheduling the first service on the third beam, the terminal may determine the HARQ feedback mode for the first service based on the first state value. It can be seen that the network device may pre-configure the terminal with a first state value for determining the HARQ feedback mode for the first service, such that the network device can control the HARQ feedback mode to be used by the terminal for the first service, which is advantageous in improving the communication reliability of the transmission of the first service between the network device and the terminal.

In the following embodiment, three possible schemes for implementing the HARQ feedback mode for the first service in Case 1 will be introduced in detail.

### Scheme 1

Specifically, the first configuration information is transmitted via RRC signaling. It can be appreciated that, before the network device transmits the first service to the terminal, the network device transmits the RRC signaling to the terminal, and configures or indicates the information on the HARQ feedback mode for the first service to the terminal via the RRC signaling. In this case, the terminal can directly learn the HARQ feedback mode to be used for the first service based on the information on the HARQ feedback mode for the first service. That is, the network device may configure or indicate the HARQ feedback mode for the first service to the terminal via the DCI scheduling the first service. In addition, the terminal in this embodiment may be a terminal in a first communication system, which is composed of all terminals that receive the first service. Therefore, the network device may configure each terminal in the first communication system with a HARQ feedback mode for the first service via RRC signaling. It should be noted that the RRC signaling transmitted by the network device to different terminals in the first communication system may be different, and the configured HARQ feedback modes may also be different.

Specifically, the HARQ feedback mode for the first service may include at least one of: a NACK-Only feedback mode, an ACK-or-NACK feedback mode, or No-HARQ feedback.

The first communication system in this embodiment will be described in detail below. Each terminal in the first communication system is a terminal that receives the first service. Here, for the broadcast mode, since the network device does not know which terminals can receive the first service before transmitting the first service, the first communication system includes all terminals that can receive the first service. For the groupcast or multicast mode, since the network device has determined the terminals that can receive the first service by means of signaling interaction or the like before transmitting the first service, the first communication system includes the terminals determined by the network device.

Further, the RRC signaling may carry an RRC parameter which may be used to represent the first configuration information. That is, the RRC parameter may indicate the HARQ feedback mode to be used by the terminal for the first service. It should be noted that the RRC parameter may be a newly added RRC parameter in the RRC signaling specified by the existing standard. The HARQ feedback mode for the first service includes at least one of: a NACK-Only feedback mode, an ACK-or-NACK feedback mode, or No-HARQ feedback.

Referring to FIG. 7 for example, in FIG. 7, the network device 710 configures the terminal 7201 with the HARQ feedback mode for the first service as NACK-Only via RRC signaling, and the network device 710 configures the terminal 7202 with the HARQ feedback mode for the first service as ACK-or-NACK via RRC signaling. Similarly, the HARQ feedback mode to be used by the terminal 7203 for the first service is the ACK-or-NACK mode, and the HARQ feedback mode to be used by the terminal 7204 for the first service is the NACK-Only mode. Finally, when the network device 710 transmits the first service to the terminal 7201, the terminal 7202, the terminal 7203, and the terminal 7204, each terminal can use the HARQ feedback mode configured for the terminal for feedback.

### Scheme 2:

Specifically, the first configuration information is transmitted via the DCI scheduling the unicast service. It can be appreciated that, before the network device transmits the first service to the terminal, the network device transmits the DCI scheduling the unicast service to the terminal, and configures the information on the HARQ feedback mode for the first service to the terminal via the DCI scheduling the unicast service. In this case, the terminal can directly learn the HARQ feedback mode to be used for the first service based on the information on the HARQ feedback mode for the first service. That is, the network device may configure or indicate the HARQ feedback mode for the first service to the terminal via the second DCI scheduling the first service. It should be noted that if there is a unicast service between the network device and the terminal, the network device may configure or indicate the HARQ feedback mode to be used for the first service to the terminal via the DCI scheduling the unicast service. In addition, if there is a unicast service between the network device and some of the terminals in the first communication system, the network device can configure or indicate the HARQ feedback mode to be used by each of these terminals separately via the DCI scheduling the unicast service. Similarly, the DCI scheduling the unicast service transmitted by the network device to each of these terminals may be different, and the HARQ feedback mode configured via the DCI may also be different.

Further, the DCI scheduling the unicast service may carry an indication field indicating the first configuration information. That is, the indication field may be used to indicate the HARQ feedback mode to be used by the terminal for the first service. It should be noted that the indication field may be a newly added field in the DCI specified by the existing standard. The HARQ feedback mode for the first service may include at least one of: a NACK-Only feedback mode, an ACK-or-NACK feedback mode, or No-HARQ feedback.

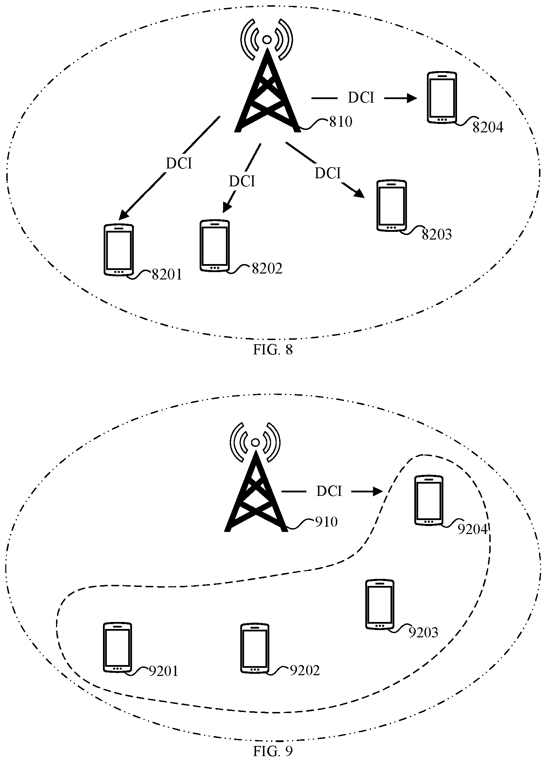

Referring to FIG. 8 for example, in FIG. 8, there is a unicast service between the network device 810 and each of the terminal 8201, the terminal 8202, the terminal 8203 and the terminal 8204. The network device 810 indicates to the terminal 8201 the HARQ feedback mode for the first service as NACK-Only via the DCI scheduling the unicast service. The network device 810 indicates to the terminal 8202 the HARQ feedback mode for the first service as ACK-or-NACK via the DCI scheduling the unicast service. Similarly, the HARQ feedback mode to be used by the terminal 8203 for the first service is the ACK-or-NACK mode, and the HARQ feedback mode to be used by the terminal 8204 for the first service is the NACK-Only mode. Finally, when the network device 810 transmits the first service to the terminal 8201, the terminal 8201 uses the NACK-Only mode for feedback, and the same principle also applies to other terminals.

### Scheme 3:

Specifically, the first configuration information is transmitted by the DCI scheduling the first service. It can be appreciated that before the network device transmits the first service to the terminal, the network device transmits the DCI scheduling the first service to the terminal, and configures the information on the HARQ feedback mode for the first service to the terminal via the DCI scheduling the first service. In this case, the terminal can directly learn the HARQ feedback mode to be used for the first service based on the information on the HARQ feedback mode for the first service. That is, the network device may configure or indicate the HARQ feedback mode for the first service to the terminal via the second DCI scheduling the first service. In addition, the network device may configure or indicate to each terminal in the first communication system the HARQ feedback mode to be used by the terminal in the first communication system via the DCI scheduling the first service.

Further, the DCI scheduling the first service may carry an indication field indicating the first configuration information. That is, the indication field may indicate the HARQ feedback mode to be used by the terminal for the first service. It should be noted that the second indication field may be a newly added field in the DCI specified by the existing standard.

Further, the first configuration information may be presented in the form of a bitmap. It should be noted that when the network device has learned which terminals can receive the first service in the current network, that is, when the network device has learned all the terminals in the first communication system in the current network, the network device can transmit the first configuration information via the DCI scheduling the first service to configure or indicate the HARQ feedback mode to be used by all the terminals in the first communication system collectively in a bitmap, thereby facilitating reduction of the number of times the second DCI is transmitted.

Referring to FIG. 9 for example, in FIG. 9, the network device has learned that the terminals that can receive the first service in the current network include the terminal 9201, the terminal 9202, the terminal 9203, and the terminal 9204, such that the terminal 9201, the terminal 9202, the terminal 9203, and the terminal 9204 can form the first communication system 920. Then, the network device 910 indicates to each terminal in the first communication system the HARQ feedback mode to be used for the first service via the first configuration information transmitted in the DCI scheduling the first service. The second indication field has a form of bitmap "1001". The first bit "1" in "1001" indicates to the terminal 9201 to perform feedback in the NACK-Only mode; the second bit "0" in "1001" indicates to the terminal 9202 to perform feedback in the ACK-or-NACK feedback mode; the third bit "0" in "1001" indicates to the terminal 9203 to perform feedback in the ACK-or-NACK mode, and the fourth bit "1" in "1001" indicates to the terminal 9204 to perform feedback in the NACK-Only feedback mode. Therefore, eventually, when the network device 910 transmits the first service to the terminal 9201, the terminal 9201 uses the NACK-Only mode for feedback, and the same principle also applies to other terminals.

In the following embodiment, three possible schemes for implementing the HARQ feedback mode for the first service in Case 2 will be introduced in detail.

### Scheme 1

Specifically, the first configuration information is transmitted by RRC signaling. It can be appreciated that, before the network device transmits the first service to the terminal, the network device transmits the RRC signaling to the terminal, and configures or indicates a predetermined threshold for determining the HARQ feedback mode for the first service to the terminal via the RRC signaling. In addition, the terminal in this embodiment may be a terminal in the first communication system, which is composed of all terminals that receive the first service. Therefore, the network device may configure a predetermined threshold for determining the HARQ feedback mode for the first service to each terminal in the first communication system via RRC signaling. It should be noted that the predetermined thresholds of respective terminals in the first communication system have a same value or different values.

Further, the RRC signaling may include an RRC parameter which represents the predetermined threshold. It should be noted that the RRC parameter may be a newly added RRC parameter in the RRC signaling specified by the existing standard.

### Scheme 2:

Specifically, the first configuration information is transmitted by the DCI scheduling the first service. It can be appreciated that, before the network device transmits the first service to the terminal, the network device may configure or indicate a predetermined threshold to the terminal via the DCI scheduling the first service. In addition, the network device may configure or indicate a predetermined threshold to each terminal in the first communication system via the DCI scheduling the first service.

Further, the terminal may obtain the predetermined threshold on a first beam, and the predetermined threshold obtained by the terminal on the first beam and predetermined thresholds obtained by terminals in the first communication system other than the terminal on a second beam may have a same value or different values. The first beam and the second beam are different beams. Further, the network device transmits the predetermined threshold on the first beam, and the predetermined threshold transmitted by the network device to the terminal on the first beam and the predetermined thresholds transmitted by the network device to terminals in the first communication system other than the terminal on the second beam have a same value or different values. The first beam and the second beam are different beams.

It can be appreciated that, when the network device transmits the DCI scheduling the first service to the terminal in a beam sweeping manner, the predetermined thresholds indicated via different beams may be the same or different. It should be noted that, although the same first service may be transmitted on different beams, the content of the DCI scheduling the first service via different beams may be different.

Further, the DCI scheduling the first service may include an indication field indicating a predetermined threshold. It should be noted that the indication field may be a newly added field in the DCI specified by the existing standard.

### Scheme 3:

Specifically, the first configuration information is transmitted by system broadcast information. It can be appreciated that, before the network device transmits the first service to the terminal, the network device may configure or indicate a predetermined threshold to the terminal via system broadcast information. In addition, the network device may configure or indicate a predetermined threshold to each terminal in the first communication system via system broadcast information.

Further, when the system broadcast information is transmitted by the network device on different beams, the predetermined thresholds configured by the system broadcast information transmitted on the different beams have the same value or different values. It can be appreciated that, when the network device transmits the system broadcast information to the terminal in a beam sweeping manner, the predetermined thresholds indicated via different beams may be the same or different.

Further, the system broadcast information may include a first parameter indicating the predetermined threshold. It should be noted that the first parameter may be a newly added parameter in the system broadcast information specified by the existing standard.

Further, the system broadcast information may include a System Information Block (SIB).

The embodiment will be specifically described below with reference to an example where the predetermined threshold includes a Reference Signal Received Power (RSRP) threshold or a communication distance threshold.

In the case where the predetermined threshold includes an RSRP threshold, before the network device transmits the first service to the terminal, the network device indicates or configures the RSRP threshold to the terminal, such that the terminal can determine the HARQ feedback mode for the first service based on the RSRP threshold. Then, when the network device transmits the first service to the terminal, the terminal may determine a first measurement value of the first service based on a pilot signal. Finally, the terminal may determine the HARQ feedback mode for the first service based on the RSRP threshold and the first measurement value.

It should be noted that, when the network device transmits the first service to the terminal, the first service may be carried on a Physical Downlink Shared Channel (PDSCH) resource. In this case the terminal may detect the pilot signal on a Resource Element (RE) corresponding to the PDSCH resource, and determine the first measurement value of the first service on the current network based on the pilot signal.

Specifically, the first measurement value may include at least one of a Demodulation Reference Signal (DMRS) or a Channel State Indication - Reference Signal (CSI-RS).

Specifically, the terminal may determine the HARQ feedback mode for the first service based on the RSRP threshold and the first measurement value as follows:
1) If the first measurement value is greater than the RSRP threshold, the HARQ feedback mode to be used by the terminal for the first service is the NACK-Only mode; or if the first measurement value is smaller than the RSRP threshold, the HARQ feedback mode to be used by the terminal for the first service is the ACK-or-NACK mode; or
2) If the first measurement value is greater than the RSRP threshold, the HARQ feedback mode to be used by the terminal for the first service is the ACK-or-NACK mode; or if the first measurement value is smaller than the RSRP threshold, the HARQ feedback mode to be used by the terminal for the first service is the NACK-Only mode; or
3) If the first measurement value is greater than or equal to the RSRP threshold, the HARQ feedback mode to be used by the terminal for the first service is the NACK-Only mode; or if the first measurement value is smaller than the RSRP threshold, the HARQ feedback mode to be used by the terminal for the first service is the ACK-or-NACK mode; or
4) If the first measurement value is greater than or equal to the RSRP threshold, the HARQ feedback mode to be used by the terminal for the first service is the ACK-or-NACK mode; or if the first measurement value is smaller than the RSRP threshold, the HARQ feedback mode to be used by the terminal for the first service is the NACK-Only mode; or
5) If the first measurement value is greater than the RSRP threshold, the HARQ feedback mode to be used by the terminal for the first service is the NACK-Only mode; or if the first measurement value is smaller than or equal to the RSRP threshold, the HARQ feedback mode to be used by the terminal for the first service is the ACK-or-NACK mode; or
6) If the first measurement value is greater than the RSRP threshold, the HARQ feedback mode to be used by the terminal for the first service is the ACK-or-NACK mode; or if the first measurement value is smaller than or equal to the RSRP threshold, the HARQ feedback mode to be used by the terminal for the first service is the NACK-Only mode.

It can be appreciated that when the network device transmits the first service, the terminal in the first communication system may measure the RSRP of the first service. If the RSRP is greater than (or small than) the RSRP threshold, the terminal may use the NACK-Only mode for feedback, or otherwise the terminal may use the ACK-or-NACK mode for feedback. Alternatively, if the RSRP is greater than or equal to the RSRP threshold, the terminal may use the NACK-Only mode for feedback, or otherwise the terminal may use the ACK-or-NACK mode for feedback, and so on.

Further, the terminal may determine the HARQ feedback mode for the first service based on the RSRP threshold and the first measurement value as follows:
1) If the first measurement value is greater than the RSRP threshold, the HARQ feedback mode to be used by the terminal for the first service is the NACK-Only mode; or if the first measurement value is smaller than the RSRP threshold, the terminal performs No-HARQ feedback; or
2) If the first measurement value is smaller than the RSRP threshold, the HARQ feedback mode to be used by the terminal for the first service is the NACK-Only mode; or if the first measurement value is greater than the RSRP threshold, the terminal performs No-HARQ feedback; or
3) If the first measurement value is greater than or equal to the RSRP threshold, the HARQ feedback mode to be used by the terminal for the first service is the NACK-Only mode; or if the first measurement value is smaller than the RSRP threshold, the terminal performs No-HARQ feedback; or
4) If the first measurement value is smaller than or equal to the RSRP threshold, the HARQ feedback mode to be used by the terminal for the first service is the NACK-Only mode; or if the first measurement value is greater than the RSRP threshold, the terminal performs No-HARQ feedback.

That is, when the network device transmits the first service, the terminal in the first communication system may determine the HARQ feedback mode for the first service based on the RSRP threshold and the first measurement value. If the first measurement value is smaller than (or greater than) the RSRP threshold, the terminal may perform feedback in the NACK-Only mode, or otherwise No-HARQ feedback may be performed. Alternatively, if the first measurement value is smaller than (or equal to) the RSRP threshold, the terminal may perform feedback in the NACK-Only mode, or otherwise No-HARQ feedback may be performed. Alternatively, if the first measurement value is greater than (or equal to) the RSRP threshold, the terminal may perform feedback in the NACK-Only mode, or otherwise No-HARQ feedback may be performed.

Further, the terminal may determine the HARQ feedback mode for the first service based on the RSRP threshold and the first measurement value as follows:
1) If the first measurement value is greater than the RSRP threshold, the HARQ feedback mode to be used by the terminal for the first service is the ACK-or-NACK mode; or if the first measurement value is smaller than the RSRP threshold, the terminal performs No-HARQ feedback; or
2) If the first measurement value is smaller than the RSRP threshold, the HARQ feedback mode to be used by the terminal for the first service is the ACK-or-NACK mode; or if the first measurement value is greater than the RSRP threshold, the terminal performs No-HARQ feedback; or
3) If the first measurement value is greater than or equal to the RSRP threshold, the HARQ feedback mode to be used by the terminal for the first service is the ACK-or-NACK mode; or if the first measurement value is smaller than the RSRP threshold, the terminal performs No-HARQ feedback; or
2) If the first measurement value is smaller than or equal to the RSRP threshold, the HARQ feedback mode to be used by the terminal for the first service is the ACK-or-NACK mode; or if the first measurement value is greater than the RSRP threshold, the terminal performs No-HARQ feedback.

That is, when the network device transmits the first service, the terminal in the first communication system may determine the HARQ feedback mode for the first service based on the RSRP threshold and the first measurement value. If the first measured value is smaller than (or greater than) the RSRP threshold, the terminal may perform feedback in the ACK-or-NACK mode, or otherwise No-HARQ feedback may be performed.

Specifically, the first measurement value may include RSRP. It can be appreciated that the terminal may determine the RSRP of the first service based on the pilot signal, and determine the HARQ feedback mode for the first service based on the RSRP threshold and the RSRP of the first service on the current network.

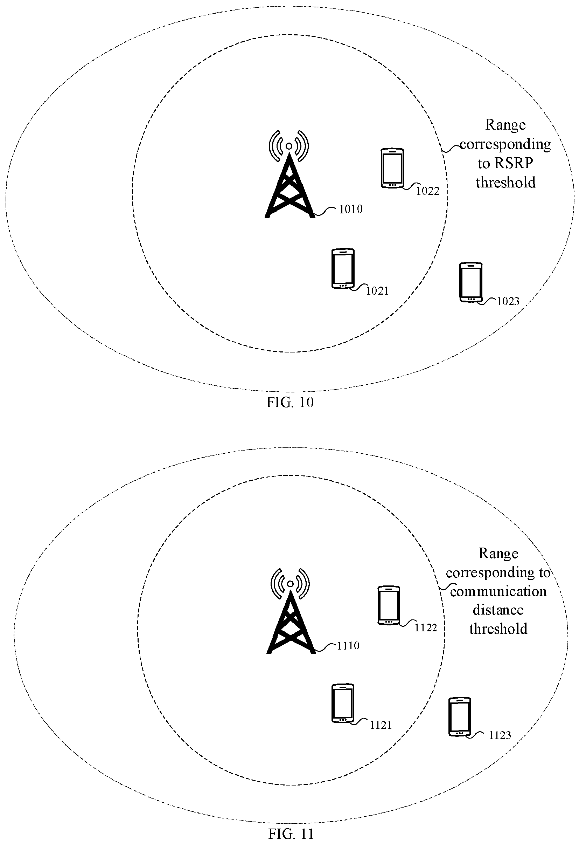

Referring to FIG. 10 for example, first, before the network device 1010 transmits the first service to the terminal 1021, the terminal 1022 and the terminal 1023 in the first communication system, the network device indicates an RSRP threshold to each of the terminal 1021, the terminal 1022 and the terminal 1023 in the first communication system via second information. In this case, the RSRP threshold configured for each of the terminal 1021, the terminal 1022, and the terminal 1023 is the same. Then, the network device 1010 transmits the first service to the terminal 1021, and the terminal 1021 measures the first service based on the pilot signal to obtain the RSRP of the first service in the current network. Finally, since the RSRP is smaller than the RSPR threshold, the terminal 1021 may use the ACK-or-NACK mode for feedback. Similarly, the terminal 1022 measures the RSRP of the first service based on the pilot signal, and the RSRP is smaller than the RSPR threshold, thus the terminal 1022 may use the ACK-or-NACK mode for feedback. The terminal 1023 measures the RSRP of the first service based on the pilot signal, and the RSRP is greater than the RSPR threshold, thus the terminal 1023 may use the NACK-Only mode for feedback.

In the case where the predetermined threshold includes a communication distance threshold, before the network device transmits the first service to the terminal, the network device indicates or configures the communication distance threshold to the terminal. Further, the terminal can determine the communication distance between the terminal and the network device based on location information of the network device. Then, when the network device transmits the first service to the terminal, the terminal may determine the HARQ feedback mode for the first service based on the communication distance between the terminal and the network device and the communication distance threshold.

In the following, two schemes for the terminal to determine the communication distance between the terminal and the network device will be introduced in detail.

### Scheme 1:

Specifically, before S630, the terminal may further include the following operations. The terminal receives the location information of the network device, and the terminal determines the communication distance between the terminal and the network device based on the location information of the network device and location information of the terminal. It can be appreciated that, before the network device transmits the first service to the terminal, the network device may configure or indicate the location information of the current network device to the terminal. In this case, the terminal may calculate the communication distance between the terminal and the network device based on its own location information and the location information of the network device.

It should be noted that the location information of the network device may be transmitted separately from or along with the first configuration information in at least one of: the RRC signaling, the DCI scheduling the unicast service, the DCI scheduling the first service, or the system broadcast information. It can be appreciated that the network device can transmit the predetermined threshold and the location information of the network device to the terminal together or separately via at least one of the RRC signaling, the DCI scheduling the unicast service, the DCI scheduling the first service, or the system broadcast information. When the network device transmits the predetermined threshold together with the location information of the network device to the terminal, the network device only needs one transmission, and does not need two separate transmissions to inform the terminal, thereby facilitating reduction of the resource overhead.

### Scheme 2:

Specifically, before S630, the terminal may further include the following operations. The terminal receives first identification information from the network device. The first identification information indicates an identification of a zone to which the network device belongs. The terminal determines the location information of the network device based on the first identification information. The terminal determines the communication distance between the terminal and the network device based on the location information of the network device and the location information of the terminal.

It should be noted that, when the communication system is deployed, the communication area where the network device and the terminal are located may be divided into a number of zones. Further, by means of network configuration or pre-configuration, the zone division information of the communication area where the network device and the terminal are located is kept synchronized between the network device and the terminal. Then, the network device may transmit third information carrying the first identification information to the terminal, and the first identification information may indicate a zone identification (ZONE ID) of a zone to which the current network device belongs. Finally, the terminal receives the first identification information and determines the location information of the network device based on the ZONE ID, thereby calculating the communication distance between the terminal and the network device based on its own location information and the location information of the network device.

It should be further noted that the first identification information may be transmitted separately from or along with the first configuration information in at least one of: the RRC signaling, the DCI scheduling the unicast service, the DCI scheduling the first service, or the system broadcast information. It can be appreciated that the network device can transmit the predetermined threshold and the first identification information to the terminal together or separately via at least one of the RRC signaling, the DCI scheduling the unicast service, the DCI scheduling the first service, or the system broadcast information. When the network device transmits the predetermined threshold and the first identification information to the terminal together, the network device only needs one transmission, and does not need two transmissions to inform the terminal, thereby facilitating reduction of the resource overhead.

In a possible example, the terminal may determine the HARQ feedback mode for the first service based on the communication distance threshold and the communication distance as follows. If the communication distance is greater than the communication distance threshold, the HARQ feedback mode to be used by the terminal for the first service is the NACK-Only mode; or if the communication distance is smaller than the communication distance threshold, the HARQ feedback mode to be used by the terminal for the first service is the ACK-or-NACK mode. Alternatively, if the communication distance is greater than the communication distance threshold, the HARQ feedback mode to be used by the terminal for the first service is the ACK-or-NACK mode; or if the communication distance is smaller than the communication distance threshold, the HARQ feedback mode to be used by the terminal for the first service is the NACK-Only mode. It can be appreciated that when the network device transmits the first service, the terminal in the first communication system may determine the HARQ feedback mode for the first service based on the communication distance and the communication distance threshold. If the communication distance is greater than (or smaller than) the communication distance threshold, the terminal may use the NACK-Only mode for feedback, or otherwise the ACK-or-NACK mode may be used for feedback.

Further, the terminal may determine the HARQ feedback mode for the first service based on the communication distance threshold and the communication distance as follows. If the communication distance is greater than the communication distance threshold, the HARQ feedback mode to be used by the terminal for the first service is the NACK- Only mode; or if the communication distance is smaller than the communication distance threshold, the terminal performs No-HARQ feedback. Alternatively, if the communication distance is smaller than the communication distance threshold, the HARQ feedback mode to be used by the terminal for the first service is the NACK-Only mode; or if the communication distance is greater than the communication distance threshold, the terminal performs No-HARQ feedback. That is, when the network device transmits the first service, the terminal in the first communication system may determine the HARQ feedback mode for the first service based on the communication distance and the communication distance threshold. If the communication distance is smaller than (or greater than) the communication distance threshold, the terminal may use the NACK-Only mode for feedback, or otherwise, No-HARQ feedback may be performed.

Further, the terminal may determine the HARQ feedback mode for the first service based on the communication distance threshold and the communication distance as follows. If the communication distance is greater than the communication distance threshold, the HARQ feedback mode to be used by the terminal for the first service is the ACK-or-NACK mode; or if the communication distance is smaller than the communication distance threshold, the terminal performs No-HARQ feedback. Alternatively, if the communication distance is smaller than the communication distance threshold, the HARQ feedback mode to be used by the terminal for the first service is the ACK-or-NACK mode; or if the communication distance is greater than the communication distance threshold, the terminal performs No-HARQ feedback. That is, when the network device transmits the first service, the terminal in the first communication system may determine the HARQ feedback mode for the first service based on the communication distance and the communication distance threshold. If the communication distance is smaller than (or greater than) the communication distance threshold, the terminal may use the ACK-or-NACK mode for feedback, or otherwise No-HARQ feedback may be performed.

Referring to FIG. 11 for example, first, before the network device 1110 transmits the first service to the terminal 1121, the terminal 1122 and the terminal 1123 in the first communication system, the network device indicates a communication distance threshold to the terminal 1121, the terminal 1122 and the terminal 1123 in the first communication system. In this case, the communication distance threshold configured for the terminal 1121, the terminal 1022, and the terminal 1123 is the same. Then, the terminal 1121 obtains the location information of the network device, and determines the communication distance between the terminal 1121 and the network device based on the location information of the network device and its own location information to obtain Communication Distance 1. Finally, when the network device 1110 transmits the first service to the terminal 1121, since Communication Distance 1 is smaller than the communication distance threshold, the terminal 1121 may use the NACK-Only mode for feedback. Similarly, the terminal 1122 calculates Communication Distance 2, and Communication Distance 2 is smaller than the communication distance threshold, thus the terminal 1122 may use the NACK-Only mode for feedback. The terminal 1123 calculates Communication Distance 3, and Communication Distance 3 is greater than the communication distance threshold, thus the terminal 1123 may use the ACK-or-NACK mode for feedback.

To summarize, there are the following schemes for the terminal to determine the communication distance between the terminal and the network device:
1) The network device includes the location information of the network device in the DCI scheduling the first service, and after decoding the DCI, the terminal in the first communication system can calculate the communication distance between the terminal and the network device based on its own location information and the location information of the network device.
2) The communication area where the network device and the terminal are located are divided into a number of zones. Then, by means of network configuration or pre-configuration, the information on the division of the communication area is kept synchronized between the network device and the terminal. Finally, the network device includes the ZONE ID of the network device in the DCI scheduling the first service, and after decoding the DCI, the terminal in the first communication system determines the location information of the network device based on the ZONE ID in the DCI, thereby calculating the communication distance between the terminal and the network device.
3) The network device configures its own location information or ZONE ID to the terminal in the first communication system via RRC signaling. The terminal calculates the communication distance between the terminal and the network device based on the location information or ZONE ID of the network device.
4) The network device configures its own location information or ZONE ID to the terminal in the first communication system via an SIB message. The terminal calculates the communication distance between the terminal and the network device based on the location information or ZONE ID of the network device.

In the following, the embodiment will be introduced in detail with reference to Case 1 when the first configuration information includes the information on the HARQ feedback mode for the first service, the first configuration information is transmitted via the DCI scheduling the first service, and the DCI scheduling the first service is carried on the beam.

It should be noted that before the network device transmits the first service to the terminal, the network device transmits the DCI scheduling the first service to the terminal on a certain beam, so as to transmit the first configuration information to the terminal via the DCI. That is, the network device indicates or configures the HARQ feedback mode to be used for the first service to the terminal via the DCI. When the terminal decodes the DCI on the beam, the terminal can directly learn the HARQ feedback mode for the first service from the first configuration information. That is, the network device directly informs the terminal of the HARQ feedback mode to be used for the first service via the DCI scheduling the first service on the beam, such that the network device can control the HARQ feedback mode used by the terminal for the first service, which is advantageous in improving the communication reliability of transmission of the first service between the network device and the terminal. The HARQ feedback mode for the first service may include at least one of: a NACK-Only feedback mode, an ACK-or-NACK feedback mode, or No-HARQ feedback.

Further, the content of the DCI scheduling the first service transmitted by the network device on different beams may be the same or different. It can be appreciated that when the network device transmits the DCI scheduling the first service to the terminal in a beam sweeping manner, the content transmitted by different beams may be the same or different. It should be noted that, although the same first service may be transmitted on different beams, the content of the DCI for scheduling the first service via different beams may be different.

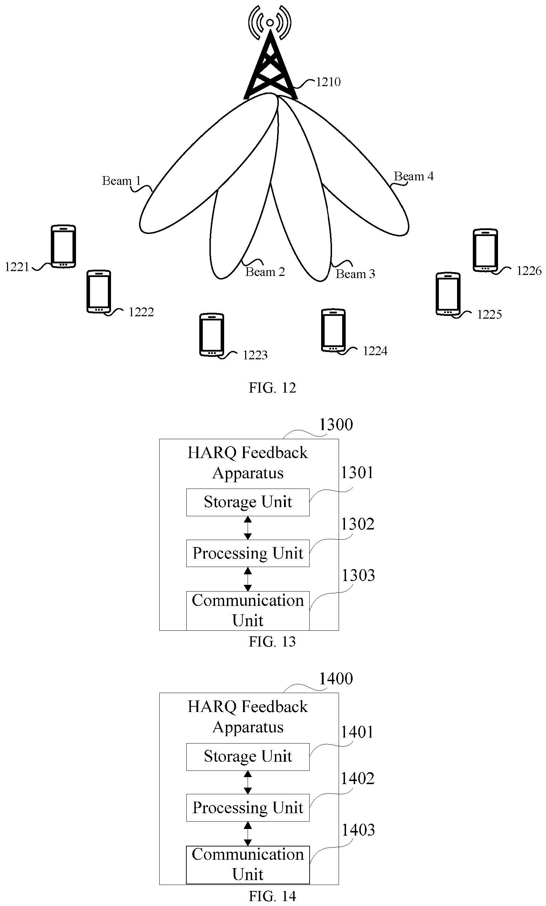

Referring to FIG. 12 for example, before the network device 1210 transmits the first service to the terminal in the first communication system, the network device 1210 indicates the HARQ feedback mode to be used for the first service as the NACK-Only mode via the DCI scheduling the first service on Beam 1. In this case, the terminal 1221 and the terminal 1222 decode the DCI on Beam 1. Therefore, when the network device 1210 transmits the first service in Beam 1, the terminal 1221 and the terminal 1222 perform feedback in the NACK-Only mode. Similarly, before the network device 1210 transmits the first service to the terminal in the first communication system, the network device 1210 indicates the HARQ feedback mode to be used for the first service as the ACK-or- NACK mode via the DCI scheduling the first service on Beam 2. In this case, the terminal 1223 decodes the DCI on Beam 2. Therefore, when the network device 1210 transmits the first service in Beam 2, the terminal 1223 performs feedback in the ACK-or-NACK mode. Similarly, it can be known that the terminal 1224 uses a HARQ feedback mode, and the terminal 1225 and the terminal 1226 use a HARQ feedback mode.

In the following embodiment, the implementation of the HARQ feedback mode for the first service in Case 3 will be introduced briefly.

Specifically, when the first configuration information is transmitted via the DCI scheduling the first service, and the DCI scheduling the first service is carried on a third beam, the first configuration information includes a first state value described in at least one related field in the DCI scheduling the first service. It can be appreciated that, before the network device transmits the first service to the terminal on the third beam, the network device may configure or indicate the first state value to the terminal via the DCI scheduling the first service on the third beam. In addition, the network device may configure or indicate the HARQ feedback modes to be used by the respective terminals in the first communication system via the DCI scheduling the first service on different beams.

Further, the content of the DCI for scheduling the first service transmitted by the network device on different beams may be the same or different. It can be appreciated that when the network device transmits the DCI for scheduling the first service to the terminal in a beam sweeping manner, the content transmitted via different beams may be the same or different. It should be noted that, although the same first service may be transmitted on different beams, the content of the DCI for scheduling the first service via different beams may be different.

In this case, the terminal determining the HARQ feedback mode for the first service based on the first configuration information may include the following operations: the terminal determining the HARQ feedback mode for the first service based on the first state value and a predetermined state table. The predetermined state table may represent a correspondence between the first state value and the HARQ feedback mode for the first service.

Further, the predetermined state table may be configured by the network or pre-configured. It should be noted that, the pre-configuration may refer to a configuration at manufacture or a configuration of an original base station that is continued to be used when the terminal moves out of the coverage area of the base station, and the embodiment is not limited to any of these examples.

Further, the first state value may include a Transmission Configuration Indicator (TCI) State.

For example, in FIG. 12, the terminal 1224 has obtained a table of a correspondence between TCI States and HARQ feedback modes, denoted as Table y. Then, at least one related field in the DCI transmitted by the network device 1210 for scheduling the first service on Beam 3 describes a state value about the TCI State, denoted as Value x. Finally, the terminal 1224 that receives the DCI on Beam 3 uses Value x to look up Table y, thereby determining that the HARQ feedback mode for the first service is the NACK-Only mode.

The above embodiment specifically describes how the terminal determines the HARQ feedback mode for the first service according to the first configuration, and after the terminal determines the HARQ feedback information (ACK or NACK) for the first service based on the HARQ feedback mode, the terminal can transmit the HARQ feedback information for the first service to the network device on a first channel resource.

Specifically, after S630, the terminal may further perform the following operations. The terminal determines HARQ feedback information for the first service based on the HARQ feedback mode, and the terminal transmits the HARQ feedback information to the network device on a first channel resource.

Specifically, the first channel resource may include at least one Physical Uplink Control Channel (PUCCH) resource.

In the following, the determination of at least one PUCCH resource of the first channel resource will be introduced in detail.
1) The network device configures or indicates the at least one PUCCH resource to the terminal via RRC signaling or a SIB message.
2) The network device configures or indicates at least one PUCCH resource set for the terminal via RRC signaling or a SIB message, and then the network device indicates the at least one PUCCH resource from the at least one PUCCH resource set to the terminal via the DCI scheduling the first service.
3) The network device configures or indicates at least one PUCCH resource set for the terminal through RRC signaling or SIB message, and then the terminal determines the at least one PUCCH resource from the at least one PUCCH resource set based on its own Radio Network Temporary Identity (RNTI) or its own identity information in the first communication system.

The first service in the invention is a Multimedia Broadcast Multicast Service (MBMS).

It can be seen that, in an embodiment of the present disclosure, the network device transmits the first configuration information to the terminal in the first communication system, and the first communication system is composed of all terminals that receive the first service. Then, the terminal receives the first configuration information from the network device, and determines the HARQ feedback mode for the first service based on the first configuration information. Since the first configuration information is transmitted by the network device to the terminal, it facilitates the network device's control of the HARQ feedback mode to be used by the terminal for the first service. In addition, since the network device configures the terminal with the HARQ feedback mode to be used for the first service, the terminal can feed back the HARQ feedback information for the first service to the network device based on the HARQ feedback mode, such that the network device can perform related operations such as retransmission subsequently. It is advantageous in improving communication reliability of the transmission of the first service between the network device and the terminal.

The solution of the embodiment has mainly been introduced in detail above from the perspective of methods. It can be appreciated that, in order to implement the above functions, the terminal and the network device may include corresponding hardware structures and/or software modules for performing the respective functions. It can be appreciated by those skilled in the art that the present disclosure can be implemented in hardware or any combination of hardware and computer software, given the units and algorithm steps in each example described in conjunction with the embodiments disclosed herein. Whether a function is performed by hardware or computer software driving hardware depends on specific applications and design constraints of the technical solutions. Those skilled in the art may implement the described functionality using different methods for each particular application, and such implementations are to be encompassed by the scope of the present disclosure.

In the embodiment, the terminal and the network device may be divided into functional units according to the above exemplary methods. For example, one functional unit may be provided for each function, or two or more functions may be integrated into one processing unit. The above integrated unit can be implemented in the form of hardware, or in the form of software program modules. It is to be noted that the division of units in the embodiment is illustrative, and is only a logical function division, and other divisions may be used in actual implementations.

When integrated units are used, FIG. 13 shows a block diagram of functional units of a HARQ feedback apparatus. The HARQ feedback apparatus 1300 is applied in a terminal, and specifically includes a processing unit 1302 and a communication unit 1303. The processing unit 1302 is configured to control and manage actions of the terminal, e.g., the processing unit 1302 is configured to enable the terminal to perform the steps in FIG. 5 or 6 and/or other processes of the technical solution as described in the embodiment. The communication unit 1303 is configured to enable communication between the terminal and the network device. The HARQ feedback apparatus 1300 may further include a storage unit 1301 for storing program codes and data of the terminal.

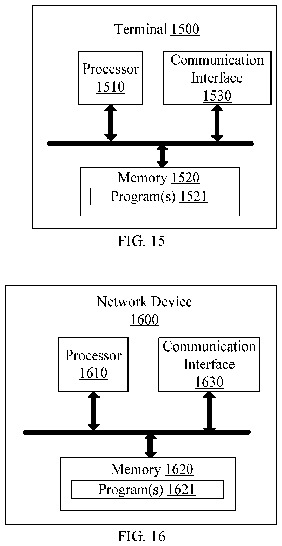

The processing unit 1302 may be a processor or a controller, such as a Central Processing Unit (CPU), a general-purpose processor, a Digital Signal Processor (DSP), an Application-Specific Integrated Circuit (ASIC), a Field Programmable Gate Array (FPGA), or any other programmable logic device, transistor logic device, hardware component, or any combination thereof. It may implement or execute the exemplary logical blocks, modules and circuits described in connection with the present disclosure. The processor 1302 may also implement a combination of computing functions, e.g., including a combination of one or more microprocessors, a combination of a DSP and a microprocessor, and the like. The communication unit 1303 may be a communication interface, a transceiver, a transceiver circuit, etc., and the storage unit 1301 may be a memory. When the processing unit 1302 is a processor, the communication unit 1303 is a communication interface, and the storage unit 1301 is a memory, the terminal involved in the embodiment may be the terminal shown in FIG. 15.

In a specific implementation, the processing unit 1302 is configured to perform any step performed by the terminal in the above method embodiments, and when performing data transmission such as transmitting data, the communication unit 1303 can be selectively invoked to complete the corresponding operation. A detailed description will be given below.

The processing unit 1302 is configured to: obtain first configuration information; and determine a HARQ feedback mode for a first service based on the first configuration information.

It can be seen that, in the embodiment of the present disclosure, the HARQ feedback apparatus applied in the terminal can the first configuration information, and determine the HARQ feedback mode for the first service based on the first configuration information, thereby facilitating configuration of the HARQ feedback mode for the first service to the terminal. In addition, since the terminal can feed back HARQ feedback information for the first service to the network device using the HARQ feedback mode for the first service, such that the network device can perform related operations such as retransmission subsequently, it is advantageous in improving communication reliability of the transmission of the first service between the network device and the terminal.

In a possible example, for obtaining the first configuration information, the processing unit 1302 may be specifically configured to: obtain the first configuration information from a network device; or obtain the first configuration information that is preconfigured.

In a possible example, the first configuration information is transmitted via at least one of: Radio Resource Control (RRC) signaling, Downlink Control Information (DCI) scheduling a unicast service, DCI scheduling the first service, or system broadcast information.

In a possible example, the system broadcast information may include a System Information Block (SIB).

In a possible example, the first configuration information may include information on the HARQ feedback mode for the first service.

In a possible example, when the first configuration information is transmitted via the DCI scheduling the first service, the first configuration information may be presented in a form of a bitmap.

In a possible example, the first configuration information may include a predetermined threshold.

In a possible example, the predetermined threshold obtained by the terminal and predetermined thresholds obtained by terminals in a first communication system other than the terminal may have a same value or different values. The first communication system is composed of all terminals that receive the first service.

In a possible example, the predetermined threshold may be obtained by the terminal on a first beam, and the predetermined threshold obtained by the terminal on the first beam and predetermined thresholds obtained by terminals in a first communication system other than the terminal on a second beam may have a same value or different values. The first beam and the second beam are different beams.

In a possible example, the predetermined threshold may include a Reference Signal Received Power (RSRP) threshold.

In a possible example, the processing unit 1302 may be further configured to: determine a first measurement value of the first service based on a pilot signal.

In a possible example, the pilot signal may include at least one of: a Demodulation Reference Signal (DMRS) or a Channel State Indication - Reference Signal (CSI-RS).

In a possible example, regarding determining the HARQ feedback mode for the first service based on the first configuration information, the processing unit 1302 may be specifically configured to: determine the HARQ feedback mode for the first service based on the RSRP threshold and the first measurement value.

In a possible example, the first measurement value may include RSRP.

In a possible example, the predetermined threshold may include a communication distance threshold.

In a possible example, the processing unit 1302 may be further configured to: obtain location information of the network device; and determine a communication distance between the terminal and the network device based on the location information of the network device and location information of the terminal.

In a possible example, the processing unit 1302 may be further configured to: obtain first identification information of the network device, the first identification information indicating an identification of a zone to which the network device belongs; determine location information of the network device based on the first identification information; and determine a communication distance between the terminal and the network device based on the location information of the network device and the location information of the terminal.

In a possible example, regarding determining the HARQ feedback mode for the first service based on the first configuration information, the processing unit 1302 may be specifically configured to: determine the HARQ feedback mode for the first service based on the communication distance threshold and the communication distance.

In a possible example, the location information of the network device is transmitted separately from or along with the first configuration information in at least one of: the RRC signaling, the DCI scheduling the unicast service, the DCI scheduling the first service, or the system broadcast information; or the first identification information is transmitted separately from or along with the first configuration information in at least one of: the RRC signaling, the DCI scheduling the unicast service, the DCI scheduling the first service, or the system broadcast information.

In a possible example, when the first configuration information is transmitted by the DCI scheduling the first service and the DCI scheduling the first service is carried on a third beam, the first configuration information may include a first state value described in at least one related field in the DCI scheduling the first service.

In a possible example, regarding determining the HARQ feedback mode for the first service based on the first configuration information, the processing unit 1302 may be specifically configured to: determine the HARQ feedback mode for the first service based on the first state value and a predetermined state table.

In a possible example, the predetermined state table may represent a correspondence between the first state value and the HARQ feedback mode for the first service.

In a possible example, the predetermined state table may be configured by a network or pre-configured.

In a possible example, the first state value may include a Transmission Configuration Indicator (TCI) State.

In a possible example, the first service includes a Multimedia Broadcast Multicast Service (MBMS) service.

In a possible example, the HARQ feedback mode for the first service may include at least one of: a NACK-Only feedback mode, an ACK-or-NACK feedback mode, or No-HARQ feedback.

When integrated units are used, FIG. 14 shows a block diagram of functional units of another HARQ feedback apparatus. The HARQ feedback apparatus 1400 is applied in a network device, and the HARQ feedback apparatus 1400 includes a processing unit 1402 and a communication unit 1403. The processing unit 1402 is configured to control and manage actions of the network device, e.g., the processing unit 1402 is configured to enable the network device to perform the steps in FIG. 5 or 6 and/or other processes of the technical solution as described in the embodiment. The communication unit 1403 is configured to enable communication between the network device and the terminal. The HARQ feedback apparatus 1400 may further include a storage unit 1401 for storing program codes and data of the terminal.

The processing unit 1402 may be a processor or a controller, such as a CPU, a general-purpose processor, a DSP, an ASIC, an FPGA, or any other programmable logic device, transistor logic device, hardware component, or any combination thereof. It may implement or execute the exemplary logical blocks, modules and circuits described in connection with the embodiment. The processing unit 1402 may also implement a combination of computing functions, e.g., including a combination of one or more microprocessors, a combination of a DSP and a microprocessor, and the like. The communication unit 1403 may be a communication interface, a transceiver, a transceiver circuit, etc., and the storage unit 1401 may be a memory. When the processing unit 1402 is a processor, the communication unit 1403 is a communication interface, and the storage unit 1401 is a memory, the terminal involved in this embodiment of the present disclosure may be the network device shown in FIG. 16.

In a specific implementation, the processing unit 1402 is configured to perform any step performed by the network device in the above method embodiments, and when performing data transmission such as transmitting data, the communication unit 1403 can be selectively invoked to complete the corresponding operation. A detailed description will be given below.

The processing unit 1402 is configured to: transmit first configuration information to a terminal, the first configuration information being used to determine a HARQ feedback mode for a first service.

It can be seen that, in the embodiment of the present disclosure, the HARQ feedback apparatus applied in the network device can transmit the first configuration information to the terminal in the first communication system, and the first communication system is composed of all terminals that receive the first service. Therefore, the terminal may determine the HARQ feedback mode for the first service based on the first configuration information. Further, since the first configuration information is transmitted by the network device to the terminal, it facilitates the network device's control of the HARQ feedback method to be used by the terminal for the first service. In addition, since the network device configures the terminal with the HARQ feedback mode to be used for the first service, the terminal can feed back the HARQ feedback information for the first service to the network device based on the HARQ feedback mode, such that the network device can perform related operations such as retransmission subsequently. It is advantageous in improving communication reliability of the transmission of the first service between the network device and the terminal.

In a possible example, the first configuration information may be transmitted via at least one of: Radio Resource Control (RRC) signaling, Downlink Control Information (DCI) scheduling a unicast service, DCI scheduling the first service, or system broadcast information.

In a possible example, the system broadcast information may include a System Information Block (SIB).

In a possible example, the first configuration information may include information on the HARQ feedback mode for the first service.

In a possible example, when the first configuration information is transmitted via the DCI scheduling the first service, the first configuration information may be presented in a form of a bitmap.

In a possible example, the first configuration information may include a predetermined threshold.

In a possible example, predetermined thresholds transmitted by the network device to terminals in a first communication system may have a same value or different values. The first communication system is composed of all terminals that receive the first service.

In a possible example, the predetermined threshold may be transmitted by the network device on a first beam, and the predetermined threshold transmitted by the network device to the terminal on the first beam and predetermined thresholds transmitted by the network device to terminals in a first communication system other than the terminal on a second beam may have a same value or different values. The first beam and the second beam are different beams.

In a possible example, the predetermined threshold includes a Reference Signal Received Power (RSRP) threshold.

In a possible example, the predetermined threshold includes a communication distance threshold.

In a possible example, the processing unit 1402 may be further configured to: transmit location information of the network device to the terminal.

In a possible example, the processing unit 1402 may be further configured to: transmit first identification information to the terminal, the first identification information indicating an identification of a zone to which the network device belongs.

In a possible example, the location information of the network device is transmitted separately from or along with the first configuration information in at least one of: the RRC signaling, the DCI scheduling the unicast service, the DCI scheduling the first service, or the system broadcast information; or the first identification information is transmitted separately from or along with the first configuration information in at least one of: the RRC signaling, the DCI scheduling the unicast service, the DCI scheduling the first service, or the system broadcast information.

In a possible example, when the first configuration information is transmitted by the DCI scheduling the first service and the DCI scheduling the first service is carried on a third beam, the first configuration information may include a first state value described in at least one related field in the DCI scheduling the first service.

In a possible example, the processing unit 1402 may be further configured to: configure a predetermined state table for the terminal, the predetermined state table representing a correspondence between the first state value and the HARQ feedback mode for the first service.

In a possible example, the first state value may include a Transmission Configuration Indicator (TCI) State.

In a possible example, the first service may include a Multimedia Broadcast Multicast Service (MBMS) service.

In a possible example, the HARQ feedback mode for the first service includes at least one of: a NACK-Only feedback mode, an ACK-or-NACK feedback mode, or No-HARQ feedback.

Referring to FIG. 15, FIG. 15 is a schematic diagram showing a structure of a terminal according to an embodiment of the present disclosure. Here, the terminal 1500 may include a processor 1510, a memory 1520, a communication interface 1530, and at least one communication bus for connecting the processor 1510, the memory 1520, and the communication interface 1530.

The memory 1520 may include, but not limited to, Random Access Memory (RAM), Read-Only Memory (ROM), Erasable Programmable Read Only Memory (EPROM), or Compact Disc Read-Only Memory (CD-ROM). The memory 1520 is used for storing related instructions and data.

The communication interface 1530 is configured to receive and transmit data.

The processor 1510 may be one or more CPUs. When the processor 510 is one CPU, the CPU may be a single-core CPU or a multi-core CPU.

The processor 1510 in the terminal 1500 is configured to read one or more program codes 1521 stored in the memory 1520, and perform the following operations: obtaining first configuration information; and determining a HARQ feedback mode for a first service based on the first configuration information.

It is to be noted that the implementation of each operation may also correspond to the corresponding description with reference to the method embodiment shown in FIG. 5 or 6, and the terminal 1500 may be configured to perform the method in the terminal according to the above embodiment, and details thereof will be omitted here.

Referring to FIG. 16, FIG. 16 is a schematic diagram showing a structure of a network device according to an embodiment of the present disclosure. Here, the network device 1600 includes a processor 1610, a memory 1620, a communication interface 1630, and at least one communication bus for connecting the processor 1610, the memory 1620, and the communication interface 1630.

The memory 1620 may include, but not limited to, Random Access Memory (RAM), Read-Only Memory (ROM), Erasable Programmable Read Only Memory (EPROM), or Compact Disc Read-Only Memory (CD-ROM). The memory 1620 is used for storing related instructions and data.

The communication interface 1630 is configured to receive and transmit data.

The processor 1610 may be one or more CPUs. When the processor 1610 is one CPU, the CPU may be a single-core CPU or a multi-core CPU.

The processor 1610 in the network device 1600 is configured to read one or more program codes 1621 stored in the memory 1620, and perform the following operations: transmitting first configuration information to a terminal in a first communication system composed of all terminals that receive the first service.

It is to be noted that the implementation of each operation may also correspond to the corresponding description with reference to the method embodiment shown in FIG. 5 or 6, and the network device 1600 may be configured to perform the method in the network device according to the above embodiment, and details thereof will be omitted here.

An embodiment of the present disclosure further provides a chip. The chip includes a processor configured to invoke and execute a computer program from a memory, to cause a device provided with the chip to perform some or all of the steps in any of the method embodiments of the present disclosure as described above in connection with the terminal and the network device.

An embodiment of the present disclosure further provides a computer-readable storage medium. The computer-readable storage medium stores a computer program for electronic data exchange. The computer program is operative to cause a computer to perform some or all of the steps in any of the method embodiments of the present disclosure as described above in connection with the terminal and the network device.

An embodiment of the present disclosure further provides a computer program product. The computer program product includes a computer program, which is operable to cause a computer to perform some or all of the steps in any of the method embodiments of the present disclosure as described above in connection with the terminal and the network device. The computer program product may be a software installation package.

The steps in the method or algorithm described in the embodiments of the present disclosure may be implemented in hardware, or may be implemented by a processor executing software instructions. The software instructions may be composed of corresponding software modules, which may be stored in a Random Access Memory (RAM), a flash memory, a Read Only Memory (ROM), an Erasable Programmable ROM (EPROM), an Electrically Erasable Programmable Read-Only Memory (EEPROM), a register, a hard disk, a removable hard disk, a Compact Disc Read Only Memory (CD-ROM), or any other form of storage medium known in the art. An exemplary storage medium is coupled to a processor, such that the processor can read information from, and write information to, the storage medium. Of course, the storage medium can also be a component of the processor. The processor and the storage medium may be provided in an ASIC.

It can be appreciated by those skilled in the art that, in one or more of the above examples, the functions described in the embodiments of the present disclosure may be implemented in whole or in part by software, hardware, firmware, or any combination thereof. When implemented in software, it can be implemented in whole or in part in the form of a computer program product. The computer program product includes one or more computer instructions. When the computer program instructions are loaded and executed on a computer, all or part of the processes or functions described in the embodiments of the present disclosure are generated. The computer may be a general purpose computer, a special purpose computer, a computer network, or any other programmable device. The computer instructions may be stored in a computer-readable storage medium, or transmitted from one computer-readable storage medium to another. For example, the computer instructions may be transmitted from a website, computer, server, or data center to another website, computer, server, or data center via wired communication (e.g., coaxial cable, optical fiber, or Digital Subscriber Line (DSL)) or wireless communication (e.g., infrared, wireless, microwave, etc.). The computer-readable storage medium may be any available medium that can be accessed by a computer, or a data storage device including one or more available mediums, such as a server, a data center, etc. The available mediums may include magnetic mediums (e.g., floppy disks, hard disks, magnetic tapes), optical medium (e.g., Digital Video Disc (DVD)), or semiconductor mediums (e.g., Solid State Disk (SSD)), etc.

With the specific embodiments described above, the objects, technical solutions and advantageous effects of the embodiments of the present disclosure have been described in further detail. It can be appreciated that the above descriptions only illustrate some specific implementations of the embodiments of the present disclosure, and are not intended to limit scope of the embodiments of the present disclosure. Any modifications, equivalent alternatives, improvements, etc. that are made on the basis of the technical solutions of the embodiments of the present disclosure are to be encompassed by the scope of the embodiments of the present disclosure.

## Claims

1. A Hybrid Automatic Repeat reQuest, HARQ, feedback method, comprising:
obtaining (S510), by a terminal, first configuration information from a network device, wherein the first configuration information comprises information on a HARQ feedback mode to the network device for a first service transmitted between the network device and the terminal; and
determining (S520), by the terminal based on the first configuration information, the HARQ feedback mode to the network device for the first service as one of a NACK-Only feedback mode, an ACK-or-NACK feedback mode, and No-HARQ feedback,
wherein the first service is a Multimedia Broadcast Multicast Service, MBMS, service, **characterized in that** the first configuration information is transmitted by the network device via Downlink Control Information, DCI, scheduling the first service, and the first configuration information is presented in a form of a bitmap in which HARQ feedback modes to be used by all terminals receiving the first service in a communication system are indicated collectively, and each bit of the bitmap indicates the HARQ feedback mode of a respective one of the terminals.

2. A Hybrid Automatic Repeat reQuest, HARQ, feedback method, comprising:
transmitting (S610), by a network device, first configuration information to a terminal, the first configuration information being used to determine a HARQ feedback mode to the network device for a first service transmitted between the network device and the terminal as one of a NACK-Only feedback mode, an ACK-or-NACK feedback mode, and No-HARQ feedback, wherein the first configuration information comprises information on the HARQ feedback mode for the first service,
wherein the first service is a Multimedia Broadcast Multicast Service, MBMS, service, **characterized in that** the first configuration information is transmitted by the network device via Downlink Control Information, DCI, scheduling the first service, and the first configuration information is presented in a form of a bitmap in which HARQ feedback modes to be used by all terminals receiving the first service in a communication system are indicated collectively, and each bit of the bitmap indicates the HARQ feedback mode of a respective one of the terminals.

3. A Hybrid Automatic Repeat reQuest, HARQ, feedback apparatus (1300) in a terminal, the apparatus comprising a processing unit (1302) configured to:
obtain first configuration information from a network device, wherein the first configuration information comprises information on a HARQ feedback mode to the network device for a first service transmitted between the network device and the terminal; and
determine, based on the first configuration information, the HARQ feedback mode to the network device for the first service as one of a NACK-Only feedback mode, an ACK-or-NACK feedback mode, and No-HARQ feedback,
wherein the first service is a Multimedia Broadcast Multicast Service, MBMS, service, **characterized in that** the first configuration information is transmitted by the network device via Downlink Control Information, DCI, scheduling the first service, and the first configuration information is presented in a form of a bitmap in which HARQ feedback modes to be used by all terminals receiving the first service in a communication system are indicated collectively, and each bit of the bitmap indicates the HARQ feedback mode of a respective one of the terminals.

4. A Hybrid Automatic Repeat reQuest, HARQ, feedback apparatus (1400) in a network device, the apparatus comprising a processing unit (1402) and a communication unit (1403), the processing unit (1402) is configured to:
transmit first configuration information to a terminal via the communication unit, the first configuration information being used to determine a HARQ feedback mode to the network device for a first service transmitted between the network device and the terminal as one of a NACK-Only feedback mode, an ACK-or-NACK feedback mode, and No-HARQ feedback, wherein the first configuration information comprises information on the HARQ feedback mode for the first service,
wherein the first service is a Multimedia Broadcast Multicast Service, MBMS, service, **characterized in that** the first configuration information is transmitted by the network device via Downlink Control Information, DCI, scheduling the first service, and the first configuration information is presented in a form of a bitmap in which HARQ feedback modes to be used by all terminals receiving the first service in a communication system are indicated collectively, and each bit of the bitmap indicates the HARQ feedback mode of a respective one of the terminals.

5. A terminal (1500), comprising a processor (1510), a memory (1520), a communication interface (1530), and one or more programs (1521), the one or more programs (1521) being stored in the memory and configured to be executed by the processor, the one or more programs comprising instructions for performing the steps in the method of claim 1.

6. A network device (1600), comprising a processor (1610), a memory (1620), a communication interface (1630), and one or more programs (1621), the one or more programs (1621) being stored in the memory and configured to be executed by the processor, the one or more programs comprising instructions for performing the steps in the method of claim 2.

## Patentansprüche

1. Rückmeldungsverfahren für hybride automatische Wiederholungsanforderung, HARQ, umfassend:
Erlangen (S510), durch ein Endgerät, von ersten Konfigurationsinformationen von einer Netzwerkvorrichtung, wobei die ersten Konfigurationsinformationen Informationen über einen HARQ-Rückmeldungsmodus zu der Netzwerkvorrichtung für einen ersten Dienst, der zwischen der Netzwerkvorrichtung und dem Endgerät übertragen wird, umfassen; und
Bestimmen (S520), durch das Endgerät basierend auf den ersten Konfigurationsinformationen, des HARQ-Rückmeldungsmodus zu der Netzwerkvorrichtung für den ersten Dienst als einen eines Nur-NACK-Rückmeldungsmodus, eines ACK-oder-NACK-Rückmeldungsmodus oder einer Keine-HARQ-Rückmeldung,
wobei der erste Dienst ein Multimedien-Rundsendungs-Vielfachsendungs-Dienst- bzw. MBMS-Dienst ist, **dadurch gekennzeichnet, dass** die ersten Konfigurationsinformationen durch die Netzwerkvorrichtung über Abwärtsstrecken-Steuerinformationen bzw. DCI, die den ersten Dienst planen, übertragen werden und die ersten Konfigurationsinformationen in einer Form einer Bitmap präsentiert werden, in der HARQ-Rückmeldungsmodi, die durch alle Endgeräte, die den ersten Dienst in einem Kommunikationssystem empfangen, verwendet werden sollen, zusammen angegeben werden, und wobei jedes Bit der Bitmap den HARQ-Rückmeldungsmodus eines jeweiligen einen der Endgeräte angibt.

2. Rückmeldungsverfahren für hybride automatische Wiederholungsanforderung, HARQ, umfassend:
Übertragen (S610), durch eine Netzwerkvorrichtung, von ersten Konfigurationsinformationen an ein Endgerät, wobei die ersten Konfigurationsinformationen verwendet werden, einen HARQ-Rückmeldungsmodus zu der Netzwerkvorrichtung für einen ersten Dienst, der zwischen der Netzwerkvorrichtung und dem Endgerät übertragen wird, als einen eines Nur-NACK-Rückmeldungsmodus, eines ACK-oder-NACK-Rückmeldungsmodus oder einer Keine-HARQ-Rückmeldung zu bestimmen, wobei die ersten Konfigurationsinformationen Informationen über den HARQ-Rückmeldungsmodus für den ersten Dienst umfassen,
wobei der erste Dienst ein Multimedien-Rundsendungs-Vielfachsendungs-Dienst- bzw. MBMS-Dienst ist, **dadurch gekennzeichnet, dass** die ersten Konfigurationsinformationen durch die Netzwerkvorrichtung über Abwärtsstrecken-Steuerinformationen bzw. DCI, die den ersten Dienst planen, übertragen werden und die ersten Konfigurationsinformationen in einer Form einer Bitmap präsentiert werden, in der HARQ-Rückmeldungsmodi, die durch alle Endgeräte, die den ersten Dienst in einem Kommunikationssystem empfangen, verwendet werden sollen, zusammen angegeben werden, und wobei jedes Bit der Bitmap den HARQ-Rückmeldungsmodus eines jeweiligen einen der Endgeräte angibt.

3. Rückmeldungsgerät für hybride automatische Wiederholungsanforderung, HARQ, (1300) in einem Endgerät, das Gerät eine Verarbeitungseinheit (1302) umfassend, konfiguriert zum:
Erlangen von ersten Konfigurationsinformationen von einer Netzwerkvorrichtung, wobei die ersten Konfigurationsinformationen Informationen über einen HARQ-Rückmeldungsmodus zu der Netzwerkvorrichtung für einen ersten Dienst, der zwischen der Netzwerkvorrichtung und dem Endgerät übertragen wird, umfassen; und
Bestimmen, basierend auf den ersten Konfigurationsinformationen, des HARQ-Rückmeldungsmodus zu der Netzwerkvorrichtung für den ersten Dienst als einen eines Nur-NACK-Rückmeldungsmodus, eines ACK-oder-NACK-Rückmeldungsmodus oder einer Keine-HARQ-Rückmeldung,
wobei der erste Dienst ein Multimedien-Rundsendungs-Vielfachsendungs-Dienst- bzw. MBMS-Dienst ist, **dadurch gekennzeichnet, dass** die ersten Konfigurationsinformationen durch die Netzwerkvorrichtung über Abwärtsstrecken-Steuerinformationen bzw. DCI, die den ersten Dienst planen, übertragen werden und die ersten Konfigurationsinformationen in einer Form einer Bitmap präsentiert werden, in der HARQ-Rückmeldungsmodi, die durch alle Endgeräte, die den ersten Dienst in einem Kommunikationssystem empfangen, verwendet werden sollen, zusammen angegeben werden, und wobei jedes Bit der Bitmap den HARQ-Rückmeldungsmodus eines jeweiligen einen der Endgeräte angibt.

4. Rückmeldungsgerät für hybride automatische Wiederholungsanforderung, HARQ, (1400) in einer Netzwerkvorrichtung, das Gerät eine Verarbeitungseinheit (1402) und eine Kommunikationseinheit (1403) umfassend, wobei die Verarbeitungseinheit (1402) konfiguriert ist zum:
Übertragen von ersten Konfigurationsinformationen an ein Endgerät über die Kommunikationseinheit, wobei die ersten Konfigurationsinformationen verwendet werden, einen HARQ-Rückmeldungsmodus zu der Netzwerkvorrichtung für einen ersten Dienst, der zwischen der Netzwerkvorrichtung und dem Endgerät übertragen wird, als einen eines Nur-NACK-Rückmeldungsmodus, eines ACK-oder-NACK-Rückmeldungsmodus oder einer Keine-HARQ-Rückmeldung zu bestimmen, wobei die ersten Konfigurationsinformationen Informationen über den HARQ-Rückmeldungsmodus für den ersten Dienst umfassen,
wobei der erste Dienst ein Multimedien-Rundsendungs-Vielfachsendungs-Dienst- bzw. MBMS-Dienst ist, **dadurch gekennzeichnet, dass** die ersten Konfigurationsinformationen durch die Netzwerkvorrichtung über Abwärtsstrecken-Steuerinformationen bzw. DCI, die den ersten Dienst planen, übertragen werden und die ersten Konfigurationsinformationen in einer Form einer Bitmap präsentiert werden, in der HARQ-Rückmeldungsmodi, die durch alle Endgeräte, die den ersten Dienst in einem Kommunikationssystem empfangen, verwendet werden sollen, zusammen angegeben werden, und wobei jedes Bit der Bitmap den HARQ-Rückmeldungsmodus eines jeweiligen einen der Endgeräte angibt.

5. Endgerät (1500), umfassend einen Prozessor (1510), einen Speicher (1520), eine Kommunikationsschnittstelle (1530) und ein oder mehrere Programme (1521), wobei das eine oder die mehreren Programme (1521) in dem Speicher gespeichert werden und konfiguriert sind, durch den Prozessor ausgeführt zu werden, wobei das eine oder die mehreren Programme Anweisungen zum Durchführen der Schritte in dem Verfahren nach Anspruch 1 umfassen.

6. Netzwerkvorrichtung (1600), umfassend einen Prozessor (1610), einen Speicher (1620), eine Kommunikationsschnittstelle (1630) und ein oder mehrere Programme (1621), wobei das eine oder die mehreren Programme (1621) in dem Speicher gespeichert werden und konfiguriert sind, durch den Prozessor ausgeführt zu werden, wobei das eine oder die mehreren Programme Anweisungen zum Durchführen der Schritte in dem Verfahren nach Anspruch 2 umfassen.

## Revendications

1. Procédé de retour de demande de répétition automatique hybride, HARQ, comprenant :
l'obtention (S510), par un terminal, de premières informations de configuration auprès d'un dispositif de réseau, dans lequel les premières informations de configuration comprennent des informations sur un mode de retour de HARQ vers le dispositif de réseau pour un premier service transmis entre le dispositif de réseau et le terminal ; et
la détermination (S520), par le terminal en fonction des premières informations de configuration, du mode de retour de HARQ vers le dispositif de réseau pour le premier service comme l'un d'un mode de retour de NACK uniquement, d'un mode de retour de ACK ou NACK et d'un retour non de HARQ,
dans lequel le premier service est un service de multidiffusion diffusion multimédia, MBMS, **caractérisé en ce que** les premières informations de configuration sont transmises par le dispositif de réseau via des informations de commande de liaison descendante, DCI, qui ordonnancent le premier service, et les premières informations de configuration sont présentées sous la forme d'un matriciel dans lequel les modes de retour de HARQ à utiliser par tous les terminaux recevant le premier service dans un système de communication sont indiqués collectivement, et chaque bit du matriciel indique le mode de retour de HARQ d'un terminal respectif des terminaux.

2. Procédé de retour d'informations de demande de répétition automatique hybride, HARQ, comprenant :
la transmission (S610), par un dispositif de réseau, de premières informations de configuration à un terminal, les premières informations de configuration étant utilisées pour déterminer un mode de retour de HARQ vers le dispositif réseau pour un premier service transmis entre le dispositif de réseau et le terminal en tant que l'un d'un mode de retour de NACK uniquement, d'un mode de retour de ACK ou NACK et d'un retour non de HARQ, dans lequel les premières informations de configuration comprennent des informations sur le mode de retour de HARQ pour le premier service,
dans lequel le premier service est un service de multidiffusion diffusion multimédia, MBMS, **caractérisé en ce que** les premières informations de configuration sont transmises par le dispositif de réseau via des informations de commande de liaison descendante, DCI, qui ordonnancent le premier service, et les premières informations de configuration sont présentées sous la forme d'un matriciel dans lequel les modes de retour de HARQ à utiliser par tous les terminaux recevant le premier service dans un système de communication sont indiqués collectivement, et chaque bit du matriciel indique le mode de retour de HARQ d'un terminal respectif des terminaux.

3. Appareil de retour de demande de répétition automatique hybride, HARQ, (1300) dans un terminal, l'appareil comprenant une unité de traitement (1302) configurée pour :
obtenir des premières informations de configuration d'un dispositif de réseau, dans lequel les premières informations de configuration comprennent des informations sur un mode de retour de HARQ vers le dispositif de réseau pour un premier service transmis entre le dispositif de réseau et le terminal ; et
déterminer, en fonction des premières informations de configuration, le mode de retour de HARQ vers le dispositif de réseau pour le premier service en tant que l'un d'un mode de retour de NACK uniquement, d'un mode de retour de ACK ou-NACK et d'un retour non de HARQ,
dans lequel le premier service est un service de multidiffusion diffusion multimédia, MBMS, **caractérisé en ce que** les premières informations de configuration sont transmises par le dispositif de réseau via des informations de commande de liaison descendante, DCI, qui ordonnancent le premier service, et les premières informations de configuration sont présentées sous la forme d'un matriciel dans lequel les modes de retour de HARQ à utiliser par tous les terminaux recevant le premier service dans un système de communication sont indiqués collectivement, et chaque bit du matriciel indique le mode de retour de HARQ d'un terminal respectif des terminaux.

4. Appareil de retour de demande de répétition automatique hybride, HARQ, (1400) dans un dispositif de réseau, l'appareil comprenant une unité de traitement (1402) et une unité de communication (1403),
l'unité de traitement (1402) est configurée pour :
transmettre des premières informations de configuration à un terminal via l'unité de communication, les premières informations de configuration étant utilisées pour déterminer un mode de retour de HARQ vers le dispositif réseau pour un premier service transmis entre le dispositif de réseau et le terminal en tant que l'un d'un mode de retour de NACK uniquement, d'un retour de ACK ou-NACK et d'un retour non de HARQ, dans lequel les premières informations de configuration comprennent des informations sur le mode de retour de HARQ pour le premier service,
dans lequel le premier service est un service de multidiffusion diffusion multimédia, MBMS, **caractérisé en ce que** les premières informations de configuration sont transmises par le dispositif de réseau via des informations de commande de liaison descendante, DCI, qui ordonnancent le premier service, et les premières informations de configuration sont présentées sous la forme d'un matriciel dans lequel les modes de retour de HARQ à utiliser par tous les terminaux recevant le premier service dans un système de communication sont indiqués collectivement, et chaque bit du matriciel indique le mode de retour de HARQ d'un terminal respectif des terminaux.

5. Terminal (1500), comprenant un processeur (1510), une mémoire (1520), une interface de communication (1530) et un ou plusieurs programmes (1521), les un ou plusieurs programmes (1521) étant stockés dans la mémoire et configurés pour être exécutés par le processeur, les un ou plusieurs programmes comprenant des instructions pour réaliser les étapes du procédé selon la revendication 1.

6. Dispositif de réseau (1600), comprenant un processeur (1610), une mémoire (1620), une interface de communication (1630), et un ou plusieurs programmes (1621), les un ou plusieurs programmes (1621) étant stockés dans la mémoire et configurés pour être exécutés par le processeur, les un ou plusieurs programmes comprenant des instructions pour réaliser les étapes du procédé selon la revendication 2.
